# EUROPEAN PATENT SPECIFICATION

(11) **EP 3 207 729 B1**
(45) Date of publication and mention of the grant of the patent: **21.02.2024**
(21) Application number: 15777951.3
(22) Date of filing: 09.10.2015
(51) Int. Cl.: H04W 16/26, H04W 24/02, H04W 52/04, H04W 76/12, H04W 36/00, H04W 84/04, H04W 88/04, H04W 16/32, H04W 36/04, H04W 48/20, H04W 64/00, H04W 88/16

(54) **A CONTROLLER ENTITY, A COMMUNICATION DEVICE, A SYSTEM AND CORRESPONDING METHODS**
STEUERUNGSEINHEIT, KOMMUNIKATIONSGERÄT, SYSTEM UND ENTSPRECHENDE VERFAHREN
ENTITÉ DE CONTRÔLE, DISPOSITIF DE COMMUNICATION, SYSTÈME ET PROCÉDÉS CORRESPONDANTS

(30) Priority: 13.10.2014 EP 14382390; 05.12.2014 EP 14382499; 05.12.2014 EP 14382497; 26.12.2014 EP 14382572; 26.12.2014 EP 14382571; 02.02.2015 EP 15382033; 02.02.2015 EP 15382031; 19.06.2015 EP 15382323; 30.07.2015 EP 15382400; 30.07.2015 EP 15382402; 30.07.2015 EP 15382399; 18.09.2015 EP 15382454; 18.09.2015 EP 15382455
(43) Date of publication of application: 23.08.2017
(73) Proprietor: Vodafone IP Licensing Limited, The Connection Newbury Berkshire RG14 2FN (GB)
(72) Inventor: DOMINGUEZ ROMERO, Francisco Javier, E-28042 Madrid (ES); LÓPEZ, Javier, E-28042 Madrid (ES); AYUSO, Cristina, E-28042 Madrid (ES)
(74) Representative: Boult Wade Tennant LLP
(86) International application number: PCT/EP2015/073399
(87) International publication number: WO 2016/058936

(56) References cited:
- WO-A1-2012/039656
- WO-A1-2013/142361
- WO-A1-2014/098702
- WO-A2-2008/015562
- WO-A2-2011/153507
- WO-A9-2011/153507
- US-A1- 2010 167 743
- US-A1- 2011 086 652
- US-A1- 2011 128 916
- US-A1- 2013 201 956

## Description

### Field of the Disclosure

This disclosure relates to a cellular communication network. In particular the disclosure relates to a controller entity for facilitating initialization of an aggregator functionality in a first communication device in a cellular communication network, a method for facilitating initialization of an aggregator functionality in a first communication device in a cellular communication network, a communication device for providing an aggregator functionality in a cellular communication network, a method for initialising an aggregator functionality in a first communication device, a system for instantiating an aggregator functionality in a cellular communication network and a method for instantiating an aggregator functionality in a cellular communication network.

### Background to the Invention

Cellular telecommunications networks characteristically provide "cells" of radio communication coverage between communication devices (which are typically mobile) and a core network (with a "downlink" from core network to communication device and an "uplink" in the opposite direction).

Various radio access technologies (RATs) are implemented: currently *digital* cellular networks are the most common and these are loosely classed as second generation (2G), third generation (3G), fourth generation (4G), etc. technologies according to whether the RAT achieves effective data communications that meet increasingly challenging requirements. In meeting these requirements, the technologies make different uses of the available radio frequency (RF) bandwidth: neighbouring cells in 2G technologies, for example, are deployed so that they use RF bandwidth at different frequencies to avoid interference.

To ensure effective coverage of a large geographic area, a plurality of cells are provided by respective network nodes referred to variously as base transceiver stations and base stations. Base (transceiver) stations are associated with one or more antenna arrays which in turn establish respective cells. They are controlled at least in part by other entities in the core network known as controllers (in 3G technologies such as UMTS these are referred to as radio network controllers, RNCs).

More recently certain categories of base transceiver stations, referred to as eNodeBs or eNBs in the context of LTE, implement both base station functionality and at least some controller functionality. The antenna arrays (and thus, often, the base stations) are geographically distributed so that the coverage of each cell typically overlaps with that of neighbouring cells only at the cell edge. The RATs aim to ensure that communication devices are provided with continuous coverage even if they are moving from the coverage of a first cell to that of a second across the cell edge region: to do this they use a reselection technique referred to as "handover" (or "handoff"). Handoff is described as "soft" when the procedure allows for a transition period during which control and/or user data traffic intended for a given communication device is routed to the device through more than one of the cells, in other words the device is permitted to "camp" on more than one cell.

Providing communication devices with coverage at cell edge typically requires more network resources; for instance transmission power needs to be higher in the downlink in order for the RF signal to propagate to the cell edge.

Release '99 of the W-CDMA Standard enabled the reuse of the same frequency at cell edge with soft handover (i.e. handover having a transition phase where a terminal effectively camps on both source and target cells).

In later releases of 3G RATs, however, HSDPA, for instance, has mainly removed in downlink the concept of soft handover: data is transmitted from only one cell to the terminal.

In many parts of the world, 4G RATs (such those compliant with the 3GPP standards known as Long Term Evolution (LTE)) are deployed. Like these later 3G releases, LTE uses universal frequency reuse (where cells sufficiently far apart operate on the same frequency) without soft handoff. Consequently, high levels of interference and low SINR (signal to interference plus noise ratio) can be expected near the cell edge. This means users at the cell edge in LTE (and HSDPA, etc.) require more radio resources (i.e. user plane resource blocks, control channel resource blocks, etc.) than users closer to the serving base transceiver stations (i.e. eNBs). Accordingly, the potential for the cell be impacted increases when there is an increase in the number and activity of users at/near to the cell edge.

LTE is also specified to handle different types of base transceiver station entities. The requirement for cellular communications coverage is far from uniform across a typical geographic area. Furthermore natural features or features of the built environment introduce additional constraints upon the operation of base station entities.

The most prevalent class of base transceiver station is the wide area eNodeB which provides coverage over a wide geographical spread (spanning distances of up to 20km) - this is sometimes termed the "macro (layer) eNB" type. Such eNBs often provide more than one "cell" or sector.

Base transceiver stations of more limited transmit power than the macro eNBs, and typically providing one cell or sector, are referred to as micro eNBs.

Smaller cells may be provided by devices of even lower power: local area eNBs (or picocell base stations) and home eNBs (or femtocell base stations). The resulting femtocells and picocells are sometimes referred to generally as "small cells". These classes of base transceiver stations are typically used in areas where coverage would otherwise be inadequate or awkward to maintain using conventional eNB equipment. The main distinction between local area and home eNBs is that in the case of the home eNBs the location and control of the device lies with the end-user rather than the network operator; these devices conventionally offer communication services to a "white-list" of home-users rather than any network subscribers that happen to be within coverage.

LTE has a hierarchical architecture so that a wide area layer of coverage (the macro layer) may overlap or encompass geographic regions within the coverage of smaller cells (the "micro layer"). Nevertheless there may be a preference on behalf of the network operator to have uplink and/or downlink traffic for certain devices handed down to the micro layer; to free up capacity in the macro layer for devices that are out of micro layer coverage, for example.

Network operators wish to improve the efficiency of the use of their networks at or near cell edges.

It is known to address the cell edge problem by:
- Increasing the performance at cell edge, for instance by adding more and more complex software in the macrocells to improve the cell edge performance (usually within the area of the coordinated scheduling between adjacent cells). In certain cases, such as for the CoMP (Coordinated Multi Point) feature described in 3GPP Release 11, the improved cell edge performance brings with it the need for dedicated transmit (Tx) and receive (Rx) antennas associated with one or more macro eNBs.
- Installing fixed Small Cells (i.e. local area eNodeBs) to increase system capacity.

The installation of fixed small cells by a network operator brings with it the burden of finding suitable locations, paying for the site rental, and deploying additional cables to connect the fixed Small Cells to other nodes of the network. Furthermore, installation and commissioning (including configuring) of fixed small cells takes time: even if wireless backhaul is used instead of cables, the fixed small cells need to be installed in a suitable position and configured for operation at that location. In some cases, this process may include the configuration and testing of directional antennas associated with such small cell devices which require the skills of a professional radio engineer. In addition, where the small cell device fails or otherwise requires servicing the device and the installation site needs to be accessible by the operator: since these devices are typically the property of the network operator but located on private land and in sometimes inaccessible locations, there are likely to be logistical and practical obstacles to intervention by one of the operator's engineers.

The LTE standards (Release 10 (and later) of the 3GPP) also describe two further Radio Access Network entities: relays and repeaters which can be used to address the problem of cell edges. Both types of entity provide extension of coverage for one cell of an existing base transceiver station.

A repeater is communicatively tied to a corresponding (typically macro) eNB, having a first antenna within a given cell (the "donor cell") of the eNB and a second antenna directed towards a coverage area where coverage extension is required. In certain instances, a repeater merely retransmits (i.e. re-broadcasts) a signal, received at a first frequency, at a second frequency, typically amplifying the repeated signal. Uplink and downlink signals may thus be conveyed through repeaters without any need for decoding.

Repeaters specified in Release 10 (and later) of the 3GPP standards decode the (incoming) signal and then recode and retransmit that signal: this new class of repeater is referred to as a "relay".

A relay is also communicatively tied to a corresponding eNB. It too has a first antenna within a given cell (the "donor cell") of the eNB and a second antenna directed towards a target coverage area. Relays however form their own cells and operate in many ways as base transceiver stations in their own right. Relays decode the signals from the donor cell, applying any necessary error correction, and make decisions about how radio resources (such as the channels within each radio subframe) are assigned.

There are certain network conditions where individual communication devices in cellular networks have a disproportionately detrimental effect on the network performance.

In certain cases, for example, one or more terminals (also termed "user equipment" or simply UE) may be close to the edge of a serving cell. A small number of active users at cell edge can consume a high number of cell resources (e.g. LTE resource blocks) since cell edge typically correlates to poor coverage; implying that a higher number of resources must be dedicated to the cell edge users to provide a throughput at a given level when compared to the demand for resources by users that are in better radio conditions (i.e. away from the cell edges). Serving radio resources to communication devices at cell-edge has a higher cost in terms of resource allocation and power usage than a similar device in a region of the cell closer to a serving base transceiver station system (such as an eNodeB).

When cellular networks are deployed, they are often specified with greater capacity than is forecast to be required by the existing communication devices. However, the numbers of communication devices and the demand for ever more network resources means that the network may be affected by capacity problems in the radio interface more often than is acceptable.

Known approaches to cell edge problems seek to increase the capacity or coverage of the cellular network by addition of further network equipment at locations in the network where cell edge problems regularly occur (or are forecast). Such equipment is typically fixed in location and requires careful planning.

Network and other performance conditions very often change over time: for instance, individual communication devices that, by virtue of their location at the cell edge and active use of the network, have a detrimental effect on the network performance at one time, may, at other times, be idle and cause no such effect. Furthermore, as UEs are typically mobile, they may have moved outside the affected cell entirely or closer to the base transceiver station equipment that serves the cell - either way, reducing the detrimental effect.

It is therefore desirable to ensure that the network can adapt to the presence of dynamic effects upon capacity and coverage and in addition to provide a system that allows the extension of coverage in a cellular network that can be deployed dynamically without requiring the siting of additional radio equipment near regions of poor radio coverage.

Furthermore, it is desirable that any adaptations to the services offered in the network will integrate with the rest of the network to avoid any issue of call drops or call failures in general. WO 2012/039656 A1 relates to relaying in mixed licensed and unlicensed carrier aggregation. WO 2008/015562 A2 relates to relay station assignment and re-assignment and frequency reuse.

### Summary of the Invention

According to a first aspect of present disclosure there is provided a controller entity for facilitating initialization of an aggregator functionality in a first communication device in a cellular communication network, the controller entity being configured to:
obtain measurement information from the first communication device;
determine values for a plurality of aggregator parameters in accordance with said measurement information, said values being required to initialize the aggregator functionality at the first communication device, wherein the aggregator functionality comprises providing radio coverage to a plurality of second communication devices within a coverage area of the first communication device, and wherein determining the values for the plurality of aggregator parameters comprises determining a set of aggregator identification parameters by selecting a Physical layer Cell Identity, PCI, from a plurality of PCIs for assignment to the first communication device, wherein selecting a PCI comprises selecting a PCI least likely to result in contention, each base station entity in the cellular communication network having a respective PCI; and
transmit the parameter values to the first communication device.

These initialization operations provide the first communication device with a parameter database of values required to initialize the aggregator functionality.

The controller entity may conveniently include processing circuitry and this processing circuitry may be configured to implement the above initialization operations.

In certain embodiments, the controller entity is further configured to determine whether the first communication device is selected to activate the aggregator functionality, and to perform the obtaining, determining and transmitting operations when the first communication device is selected.

In certain embodiments, the controller entity is further configured to obtain measurement information by obtaining capability values for the first communication device.

In certain embodiments, the controller entity is further configured to transmit a command to the first communication device to activate the aggregator functionality.

Here, the selected PCI may not be assigned to any other network entity. Alternatively, the selected PCI is a PCI currently assigned to another network entity, the PCI being selected in accordance with a signal strength metric, the PCI for the other network entity being selected provided the signal strength metric is less than a threshold level.

In certain embodiments, the controller entity is further configured to determine the set of aggregator identification parameters by selecting a cell identifier from a plurality of cell identifiers for assignment to the first communication device, each base station entity in the cellular communication network having a respective cell identifier.

In certain embodiments, the controller entity is configured to determine the set of aggregator identification parameters by: obtaining macrocell information from the first communication device; and extracting macrocell identification parameters for the first communication device.

According to a second aspect of present disclosure there is provided a method for facilitating initialization of an aggregator functionality in a first communication device in a cellular communication network, the method comprising:
obtaining measurement information from the first communication device;
determining values for a plurality of aggregator parameters in accordance with said measurement information, said values being required to initialize the aggregator functionality at the first communication device, wherein the aggregator functionality comprises providing radio coverage to a plurality of second communication devices within a coverage area of the first communication device, and wherein determining the values for the plurality of aggregator parameters comprises determining a set of aggregator identification parameters by selecting a Physical layer Cell Identity, PCI, from a plurality of PCIs for assignment to the first communication device, wherein selecting a PCI comprises selecting a PCI least likely to result in contention, each base station entity in the cellular communication network having a respective PCI; and
transmitting the parameter values to the first communication device.

In certain examples useful for understanding the invention, the method may further comprise determining whether the first communication device is selected to activate the aggregator functionality, and only performing the obtaining, determining and transmitting operations when the first communication device is selected.

In certain examples useful for understanding the invention, obtaining measurement information includes obtaining capability values for the first communication device.

In certain examples useful for understanding the invention, the method may further comprise transmitting a command to the first communication device to activate the aggregator functionality.

In certain examples useful for understanding the invention, determining values for the plurality of aggregator parameters includes determining a set of aggregator identification parameters.

Here, determining the set of aggregator identification parameters includes selecting a Physical layer Cell Identity, PCI, from a plurality of PCIs for assignment to the first communication device, each entity in the cellular communication network having a respective PCI.

In certain cases, the selected PCI may not be assigned to any other network entity. Alternatively, the selected PCI may be a PCI currently assigned to another network entity, the PCI being selected in accordance with a signal strength metric, the PCI for the other network entity being selected provided the signal strength metric is less than a threshold level.

In certain examples useful for understanding the invention, determining the set of aggregator identification parameters includes selecting a cell identifier from a plurality of cell identifiers for assignment to the first communication device, each base station entity in the cellular communication network having a respective cell identifier.

In certain examples useful for understanding the invention, determining the set of aggregator identification parameters includes: obtaining macrocell information from the first communication device; and extracting microcell identification parameters for the first communication device.

According to a third aspect of present disclosure, there is provided a communication device for providing an aggregator functionality in a cellular communication network, the communication device being configured to initialize the aggregator functionality by:
performing at least one measurement operation to generate a measurement output;
transmitting measurement information corresponding to the measurement output to a controller entity;
storing values for aggregator parameters obtained from the controller entity, the aggregator parameters being determined in accordance with the measurement information, the stored values forming a parameter database of values required to initialise the aggregator functionality the parameters including an assigned Physical layer Cell Identity, PCI, of a plurality of PCIs, the assigned PCI being the PCI least likely to result in contention, each base station entity in the cellular communication network having a respective PCI; and
executing the aggregator functionality using the values from the parameter database wherein the aggregator functionality comprises providing radio coverage to a plurality of second communication devices within a coverage area of the communication device.

In certain examples useful for understanding the invention, the communication device may further be configured, prior to storing values for aggregator parameters, to:
receive a request for measurement information from the controller entity.

In certain examples useful for understanding the invention, the request for measurement information may include a request for capability values for the communication device.

In certain examples useful for understanding the invention, the communication device may perform said at least one measurement operation by retrieving historical measurement output.

In certain examples useful for understanding the invention, the communication device may further be configured to receive a command from the controller entity to activate the aggregator functionality, and the operation of executing the aggregator functionality may be performed in response to the receipt of the command.

According to a fourth aspect of present disclosure there is provided a method for initialising an aggregator functionality in a first communication device, the method comprising:
performing at least one measurement operation to generate a measurement output;
transmitting measurement information corresponding to the measurement output to a controller entity;
storing values for aggregator parameters obtained from the controller entity, the aggregator parameters being determined in accordance with the measurement information, the stored values forming a parameter database of values required to initialise the aggregator functionality, the parameters including an assigned Physical layer Cell Identity, PCI, or a plurality of PCIs, wherein selecting a PCI comprising selecting a PCI least likely to result in contention, each base station entity in the cellular communication network having a respective PCI; and
executing the aggregator functionality using the values from the parameter database, wherein the aggregator functionality comprises providing radio coverage to a plurality of second communication devices within a coverage area of the first communication device.

In certain unclaimed embodiments, the method may further comprise, prior to storing values for aggregator parameters: receiving a request for measurement information from the controller entity.

In certain examples useful for understanding the invention, the request for measurement information may include a request for capability values for the first communication device.

In certain unclaimed embodiments, performing at least one measurement operation may include retrieving historical measurement output.

In certain examples useful for understanding the invention, the method may further comprise receiving a command from the controller entity to activate the aggregator functionality, wherein the operation of executing the aggregator functionality is performed in response to the receipt of the command.

According to a fifth aspect of present disclosure, there is provided a system for instantiating an aggregator functionality in a cellular communication network, the system including at least a first communication device and a controller entity, wherein the controller entity is configured to: obtain measurement information from the first communication device; determine values for a plurality of aggregator parameters in accordance with said measurement information, said values being required to initialize the aggregator functionality at the first communication device, wherein determining the values for the plurality of aggregator parameters comprises determining a set of aggregator identification parameters, by selecting a Physical layer Cell Identity, PCI, from a plurality of PCIs for assignment to the first communication device, wherein selecting a PCI comprises selecting a PCI least likely to result in contention, each base station entity in the cellular communication network having a respective PCI; and transmit the parameter values to the first communication device; and wherein the first communication device is configured to store the determined values for the aggregator parameters as a parameter database of values required to initialise the aggregator functionality; and execute the aggregator functionality using the values from the parameter database, wherein the aggregator functionality comprises providing radio coverage to a plurality of second communication devices within a coverage area of the first communication device.

According to a sixth aspect of present disclosure there is provided a method for instantiating an aggregator functionality in a cellular communication network, the cellular communication network including at least a first communication device, the method comprising: obtaining measurement information from the first communication device; determining values for a plurality of aggregator parameters in accordance with said measurement information, said values being required to initialize the aggregator functionality at the first communication device, wherein determining the values for the plurality of aggregator parameters comprises determining a set of aggregator identification parameters by selecting a Physical layer Cell Identity, PCI, from a plurality of PCIs for assignment to the first communication device, wherein selecting a PCI comprises selecting a PCI least likely to result in contention, each base station entity in the cellular communication network having a respective PCI; transmitting the parameter values to the first communication device; at the first communication device, storing the determined values for the aggregator parameters as a parameter database of values required to initialise the aggregator functionality; and executing the aggregator functionality using the values from the parameter database, wherein the aggregator functionality comprises providing radio coverage to a plurality of second communication devices within a coverage area of the first communication device.

As a result, the provision of a new aggregation cell by the first communication device can be managed by the core network in the same manner as the provision of a distinct new macrolayer cell, avoiding any contention for core network resource. Once a given communication device is selected, by the controller entity, to provide an aggregator facility, that facility is activated: the initialisation operations above form part of the activation procedure and ensure that the first communication device is assigned values of parameters, which define operations of the aggregator facility that will be compatible with the services provided by the existing macrolayer cellular telecommunications infrastructure.

According to examples disclosed herein, the examples being useful to understand the claimed invention, there is provided a controller entity for assigning an identifier to a first communication device in a cellular communication network, the controller entity being configured to:
reserve a plurality of identifiers for assignment to communication devices;
select a given one of said reserved identifiers by determining whether the given identifier is available for assignment and, if the given identifier is available, setting the given identifier as a selected identifier; and
assign the selected identifier to the first communication device,
wherein the processing circuitry is configured to determine whether the given identifier is available for assignment by:
   determining whether the given identifier is currently assigned to any communication device; and
   if the given identifier is not currently assigned, determining that the given identifier is available for assignment; and
   if the given identifier is currently assigned, further determining whether a network parameter fulfils a selection criterion, the network parameter being measured for the communication device to which the given identifier is currently assigned, and if the network parameter fulfils the selection criterion, determining that the given identifier is available for assignment;
   otherwise determining that the given identifier is not available for assignment and selecting another one of the reserved identifiers.

In certain examples useful for understanding the invention, the plurality of identifiers may each be Physical layer Cell Identities, PCI.

In certain examples being useful to understand the claimed invention, the selection criterion may be that the network parameter exceeds a threshold level.

In certain examples being useful to understand the claimed invention, the selection criterion may be that the value of the network parameter for the currently assigned communication device is greater than the value of a corresponding network parameter measured for any other communication device to which any one of the reserved identifiers is currently assigned.

In certain examples being useful to understand the claimed invention , the network parameter may be an estimated propagation distance to the first communication device.

In certain examples being useful to understand the claimed invention, the selection criterion may be that the network parameter is lower than a second threshold level.

In certain examples being useful to understand the claimed invention , the selection criterion may be that the value of the network parameter for the currently assigned communication device is less than the value of a corresponding network parameter measured for any other communication device to which any one of the reserved identifiers is currently assigned. In certain examples being useful to understand the claimed invention but not covered by the claims, the network parameter may be a measure of signal interference at the first communication device due the currently assigned communication device.

In certain examples being useful to understand the claimed invention, the network parameter may be a measure of signal strength at the first communication device of signals transmitted by the currently assigned communication device.

According to other examples disclosed herein useful to understanding the invention, there is provided a method for assigning an identifier to a first communication device in a cellular communication network, the first communication device being configured to provide an aggregator functionality, the method comprising:
reserving a plurality of identifiers for assignment to communication devices;
selecting a given one of said reserved identifiers by determining whether the given identifier is available for assignment and, if the given identifier is available, setting the given identifier as a selected identifier; and
assigning the selected identifier to the first communication device,
wherein determining whether the given identifier is available for assignment comprises:
   determining whether the given identifier is currently assigned to any communication device; and
   if the given identifier is not currently assigned, determining that the given identifier is available for assignment; and
   if the given identifier is currently assigned, further determining whether a network parameter exceeds a threshold level, the network parameter being measured for the communication device to which the given identifier is currently assigned, and if the network parameter is below the threshold level, determining that the given identifier is available for assignment;
   otherwise determining that the given identifier is not available for assignment and selecting another one of the reserved identifiers.

In certain examples being useful to understand the claimed invention, the plurality of identifiers may each be Physical layer Cell Identities, PCI.

In certain examples being useful to understand the claimed invention, the selection criterion may be that the network parameter exceeds a threshold level.

In certain examples being useful to understand the claimed invention, the selection criterion may be that the value of the network parameter for the currently assigned communication device is greater than the value of a corresponding network parameter measured for any other communication device to which any one of the reserved identifiers is currently assigned.

In certain examples being useful to understand the claimed invention, the network parameter may be an estimated propagation distance to the first communication device.

In certain examples being useful to understand the claimed invention, the selection criterion may be that the network parameter is lower than a second threshold level.

In certain examples being useful to understand the claimed invention, the selection criterion may be that the value of the network parameter for the currently assigned communication device is less than the value of a corresponding network parameter measured for any other communication device to which any one of the reserved identifiers is currently assigned.

In certain examples being useful to understand the claimed invention, the network parameter may be a measure of signal interference at the first communication device due the currently assigned communication device.

In certain examples being useful to understand the claimed invention, the network parameter may be a measure of signal strength at the first communication device of signals transmitted by the currently assigned communication device.

In addition, the above aspects and/or examples, useful for understanding the invention, may be implemented within a controller entity, for controlling an aggregator facility in a cellular telecommunication network, wherein the network has a core network, CN, and a radio access network, RAN, and serves at least one first communication device, the controller entity comprising a network interface unit configured to provide an interface to the CN and controller unit configured: to obtain performance condition information for a region of the telecommunication network, to determine whether a second communication device provides aggregator functionality to said at least one first communication device, and to instruct the second communication device to establish an aggregation connection to the first communication device in dependence upon the determination.

In certain examples being useful to understand the claimed invention, the performance conditions include conditions associated with a communication link between the or each first communication device and an eNB in the RAN, and the controller unit is configured to determine whether a second communication device provides aggregator functionality by determining whether the performance conditions match trigger conditions.

In certain examples being useful to understand the claimed invention , the controller unit is configured to instruct the second communication device to establish an aggregation connection by assigning a second communication device to operate in the aggregator mode, upon receipt of an indication that performance conditions match the trigger conditions, and commanding the first communication device to switch at least a portion of its data link from the eNB to the second communication device in aggregator mode, wherein aggregator mode is a mode in which the second communication device is configured to aggregate data traffic from one or more of said first communication devices.

In certain examples being useful to understand the claimed invention, the performance conditions include conditions related to the location of one or more second communication device and the controller unit is further configured to obtain performance condition information repeatedly at time intervals and to determine whether a second communication device provides aggregator functionality on successive occasions in dependence upon the performance condition information thus obtained, thereby updating the determination. In certain embodiments, the conditions related to the location of one or more second communication device indicate whether each second communication device is static for a duration sufficient to allow effective aggregator functionality.

In certain examples being useful to understand the claimed invention, the controller unit is configured to activate the network interface unit in dependence upon the performance condition information, thereby activating an aggregator layer in the telecommunication network. In certain embodiments, the processing means is configured to deactivate the network interface unit in dependence upon the performance condition information, thereby deactivating an aggregator layer in the telecommunication network.

In certain examples being useful to understand the claimed invention, the performance condition information includes location information for the at least one first communication device and the controller unit is further configured to determine whether a second communication device provides aggregator functionality in dependence upon the location information for the at least one first communication device.

In certain examples being useful to understand the claimed invention; the controller entity corresponds to the aggregator controller in the system described above and may implement any of the functionalities of the aggregator controller in the system described above.

In addition, the above aspects and/or examples may be implemented in conjunction with a method, useful to understand the claimed invention, in a controller entity for determining functionality of communication devices in a cellular communication network including a plurality of communication devices, the method comprising: obtaining at least one measure of the performance of the cellular communication network in a component area of radio coverage; determining from the or each measure of performance whether performance conditions in the component area of radio coverage support the activation of an aggregator facility, said aggregator facility providing radio coverage to at least one first communication device within a selected geographical area; determining from the or each measure of performance whether a net benefit is expected for the performance of the network in the component area as a result of the activation of the aggregator facility; and controlling activation of an aggregator functionality at at least one second communication device when performance conditions in the component area of radio coverage support the activation of the aggregator facility and when a net benefit is expected.

As a result, it can be determined whether an aggregator facility (i.e. an aggregator layer), in which the radio coverage offered by the macrocell is extended by the addition of radio coverage from one or more aggregators, can and should (according to some criteria) be initiated. Each second communication device that becomes an aggregator has a functionality whereby that device may provide radio coverage in addition to that of the macrocell. This aggregator functionality may be activated as a routine within a client application executing on the communication device or as a dedicated functionality, for example.

In certain cases being useful to understand the claimed invention, determining whether a net benefit is expected as a result of the activation of the aggregator facility may include determining whether the number of static first communication devices located in a portion of the component area within range of the at least one second communication device exceeds a threshold number.

In certain cases being useful to understand the claimed invention, determining whether performance conditions support the activation of an aggregator facility includes determining whether network conditions necessary for the activation of an aggregator facility hold for a given component area of radio coverage; and determining whether network conditions sufficient to support the activation of an aggregator facility hold for the component area.

In certain cases being useful to understand the claimed invention, determining whether the network conditions necessary for the activation of an aggregator facility hold includes at least one of: determining whether cell load exceeds a load threshold while throughput lies below a minimum throughput threshold; determining whether the number of users in a region of the cell exceeds a user number threshold while throughput for a given application falls below a minimum throughput threshold; determining whether a happiness metric lies below a happiness threshold; and/or determining whether the usage of control resources exceeds a control resource threshold.

In certain cases being useful to understand the claimed invention, the network conditions sufficient for the activation of an aggregator facility depend upon the level of at least one of the following parameters: the number of communication devices in the component area of radio coverage; the number of communication devices in the component area of radio coverage having activated aggregator functionality; signal to interference plus noise ratio, SINR; path loss/received signal received power, RSRP; the available radio access technologies, operational frequency bands and/or carriers; location information of the communication devices; mobility information of the communication devices; and predicted device power profile for the at least one communication devices.

In certain cases being useful to understand the claimed invention, the at least one second communication device is one of: a user equipment (UE); a machine type communication (MTC) device; a repeater; a relay unit; an access point; wireless station; small cell station; or a dedicated aggregator facility communication device.

In certain cases being useful to understand the claimed invention, determining whether a net benefit as a result of the activation of the aggregator facility is performed on a macrocell basis for at least one macrocell within the cellular telecommunications network.

In addition, the above aspects and/or examples may be implemented in conjunction with a method useful for understanding the invention, in a controller entity for determining functionality of communication devices in a cellular communication network including a plurality of communication devices, the plurality of communication devices including one or more candidate aggregator devices, the method comprising: obtaining information relative to candidate aggregator devices in a given area of radio coverage; for each of a plurality of subsets of the candidate aggregator devices, estimating a corresponding expected gain based on the obtained information, wherein the expected gain is a difference between an estimated value of a first measure of performance of the network after activation of an aggregator functionality in said subset of candidate aggregator devices and a first measured value of the first measure of performance of the network before activation of an aggregator functionality in any of the plurality of subsets, and wherein the aggregator functionality provides radio coverage to at least one first communication device within a selected geographical area; and activating an aggregator functionality in at least one subset selected from the plurality of subsets based at least in part on their corresponding expected gains.

Examples useful for understanding the invention, of the techniques used to obtain the estimated value of the first measure of performance of the network include: estimation by temporary activation of the aggregator functionality (whether complete or partial activation of the aggregator functionality is performed); and estimation which requires no activation of the aggregator functionality (for example using a modelling or inference technique to interpolate or extrapolate from known historical or other related indirect measurements).

In certain cases being useful to understand the claimed invention, the method may further comprise: maintaining the aggregator functionality activated in the at least one selected subset if a second measured value of the first measure of performance of the network after activation of the aggregator functionality in the at least one selected subset is higher than said first measured value.

It is noted that one or more of the subsets of the candidate aggregator devices could have a single candidate aggregator device as a member. Often, however, there are likely to be a plurality of such candidate aggregator devices in each subset considered.

In certain cases useful for understanding the invention, the method may further comprise: choosing a selection algorithm for use in selecting the at least one subset based on a type of the obtained information.

As a result, the aggregator selection algorithm used may be chosen to suit the available type of information relative to candidate aggregator devices in the given area of radio coverage obtained.

In certain cases being useful to understand the claimed invention, the expected gain for each subset is estimated by: obtaining the first measured value by measuring said first measure of performance of the network before activation of an aggregator functionality in any of the plurality of subsets; and for each candidate aggregator device in the subset, calculating the estimated value of the first measure of performance of the network for a case where the device provides an active aggregator functionality, and calculating a difference between the estimated value and the first measured value of the first measure.

Alternatively, the expected gain for each subset is estimated by, obtaining the first measured value by measuring said first measure of performance of the network before activation of an aggregator functionality in any of the plurality of subsets; and for each subset, calculating the estimated value of the first measure of performance of the network for a case where each of the devices in the subset provides an active aggregator functionality, and calculating a difference between the estimated value and the first measured value of the first measure.

In certain cases being useful to understand the claimed invention, the subset in which the aggregator functionality is activated is selected by: evaluating the expected gain for each subset; and selecting a subset having a required expected gain. Here, the evaluation of the expected gain may comprise calculating which of the at least one subsets provides the greatest expected gain, and wherein the selection of the subset having the required expected gain comprises selecting the subset that provides the greatest expected gain.

Alternatively, the evaluation of the expected gain may comprise calculating which of the subsets requires fewest changes in aggregator devices from the aggregator devices currently providing the aggregator functionality, and wherein the selection of the subset having the required expected gain comprises selecting the subset that requires fewest changes in aggregator devices, the estimated expected gain exceeding a threshold gain value.

In a further case useful for understanding the invention, the evaluation of the estimated expected gain may comprise modelling performance of the network with the selected subset activated and comparing that modelled performance information to the measured performance of the network before activation of an aggregator functionality.

In certain cases useful for understanding the invention, if the second measured value of the first measure of performance of the network does not exceed the first measured value, the method may further include: controlling the or each candidate aggregator device having an active aggregator functionality to deactivate the aggregator functionality.

In certain cases useful for understanding the invention, activating the aggregator functionality in the at least one selected subset may include, for the or each candidate aggregator device in the selected subset, controlling the respective device to activate the active aggregator functionality.

In certain cases useful for understanding the invention, user the method may further comprise obtaining a third measured value of a second measure of performance of the network before activation of an aggregator functionality in any of the plurality of subsets; and maintaining the aggregator functionality activated in the at least one selected subset if a fourth measured value of the second measure of performance of the network after activation of the aggregator functionality in the at least one selected subset is higher than the third measured value.

In such cases, the second measure of performance used in determining whether to maintain an already active aggregator functionality may thus differ from the first measure used to determine whether the aggregator functionality should be activated in the first instance.

In certain cases useful for understanding the invention, the method may further comprise updating the selection of candidate aggregator devices, at spaced-apart intervals of time, by: obtaining a further measured value of the measure of performance of the network; for each subset of the candidate aggregator devices, estimating an updated corresponding expected gain; selecting at least one of the subsets based at least in part upon their corresponding updated expected gain; activating an aggregator functionality in each selected subset; and maintaining the active aggregator functionality if the further measured value of the measure of performance of the network exceeds a reference value of said measure. Here the method may further comprise, before estimating the updated expected gain, changing the configuration of the active aggregator functionality in response to the further performance information.

In certain cases useful for understanding the invention, the reference value may be a value of said measure averaged over a plurality of historical measurements. Alternatively, the reference measured value may be a value of said measure selected from any one of N further measured values of said measure obtained in the N most recent update operations.

In certain cases useful for understanding the invention, each candidate aggregator device may be a communication device that fulfils at least one criterion selected from: sufficient battery life; location within a portion of the given area of radio coverage for which the aggregator functionality is expected to be required; and current path loss metric for the communication link between the communication device and the cellular communication network falls below a path loss threshold.

Examples of communication device, useful for understanding the invention, may include one of a user equipment (UE); a machine type communication (MTC) device; an access point; wireless station; and/or small cell station.

In respective cases, the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

The above aspects and/or examples may also be implemented in conjunction with a method, useful for understanding the invention, for determining functionality of communication devices in a cellular communication network including a plurality of communication devices, the plurality of communication devices including one or more candidate aggregator devices, the method comprising, at spaced-apart intervals of time: estimating an expected gain for each of a plurality of subsets of the candidate aggregator devices, the estimate being based on information relative to candidate aggregator devices in a given area of radio coverage, wherein the expected gain is a difference between an estimated value of a measure of performance of the network after activation of an aggregator functionality in said subset of candidate aggregator devices and a current measured value of the measure of performance of the network, and wherein the aggregator functionality provides radio coverage to at least one first communication device within a selected geographical area; activating an aggregator functionality in at least one subset selected from the plurality of subsets based at least in part on their corresponding expected gains; and maintaining the activated aggregator functionality in the at least one selected subset if the current value of the measure of performance of the network exceeds a reference value of said measure.

The above aspects and/or examples may be implemented in conjunction with a communication device, useful for understanding the invention, device- for providing an aggregator facility in a telecommunications network having a core network, CN, and a radio access network, RAN, the communication device comprising: a communication unit configured to establish an aggregation connection to at least one nearby communication device and to establish a second connection between the at least one nearby communication device and the CN, and a processor unit configured to report device status information to an aggregator controller, to receive instructions from the aggregator controller, said instructions being dependent upon performance conditions including the reported device status, and to enable the aggregation connection in accordance with the instructions.

In certain examples, useful for understanding the invention, the processor is configured to report device status information including information selected from: the location of the communication device, accuracy of the location, supported RAT technologies, supported RAT frequency bands, battery characteristics, mobility state, and/or current battery drain consumption.

In certain examples, useful for understanding the invention, the processor is configured to enable the aggregation connection by establishing an aggregation cell at a frequency band different from an operating frequency band of the RAN.

In certain examples, useful for understanding the invention, the processor is configured to enable the aggregation connection by establishing an aggregation cell using a wireless communication technology different from a wireless communication technology used by the RAN.

In certain examples, useful for understanding the invention, the processor unit is further configured to enable the second connection by enabling the communication unit, the second connection including the aggregation connection and a wireless connection between the communication device and the RAN.

Certain examples, useful for understanding the invention, of the aggregation cell serve more than one nearby communication device. In these examples, the wireless connection aggregates a data traffic for each of the nearby communication devices into an aggregated payload, thereby making more effective use of the wireless connection.

In certain examples, useful for understanding the invention, the communication device for providing an aggregator facility corresponds to the second communication device in the system described above and may implement any of the functionalities of the equivalent second communication device in the system described above.

The above aspects and/or examples may also be implemented in conjunction with a method, useful for understanding the invention, for reporting readiness of a communication device to act as aggregator in a telecommunications network having at least one controller entity, the method comprising: determining a change in location of the communication device based on two or more locations determined at temporally spaced apart intervals, the interval being a first interval; if there has been no change in location over the first interval, further comparing locations at a second interval; and if there has been no change in location over the second interval, determining that the communication device is in an aggregator-ready status and reporting the location of said aggregator-ready device. Conveniently changes in location may be determined in the communication device itself.

In certain cases, useful for understanding the invention, the location of the communication device is an absolute location. Conveniently, the location of the communication device may be determined using a global navigation satellite system, GNSS, such as GPS. The location of the communication device may be reported in GPS format.

In certain cases, useful for understanding the invention, the second interval may be set in accordance with the type of the communication device.

In certain cases, useful for understanding the invention, the method may further comprise determining that the communication device is not in an aggregator-ready status if there has been a change in location over the first interval; and reporting the location to the controller entity. The method may then further comprise determining location of the communication device after a third temporally spaced apart interval.

In certain cases, useful for understanding the invention, the method may further comprise, if there has been no change in location over the second interval, determining the location of the communication device at temporally spaced apart intervals, the interval being a fourth predetermined interval.

In certain cases, useful for understanding the invention, reporting the location of the aggregator-ready device may comprise reporting the location to the controller entity. Alternatively or additionally, reporting the location of the aggregator-ready device may further comprise reporting aggregator-ready status to the controller entity.

In certain cases, useful for understanding the invention, the method may further comprise obtaining additional information concerning the status of the communication device; and reporting the additional information to the controller entity. The additional information may conveniently include an indication of the remaining battery life of the communication device.

The above aspects and/or examples may also be implemented in conjunction with a method, useful for understanding the invention, for handling change in mobility status of a communication device that provides an active aggregator cell in a telecommunications network, the telecommunications network having a core network, at least one controller entity and a macrolayer radio access network, the macrolayer radio access network being configured to provide a backhaul connection to the core network and to provide wireless communication connections to communication devices, the method comprising: at temporally spaced apart intervals, obtaining a plurality of locations of the communication device; comparing a location determined at an earlier time to a location at a later time; if there has been no change in location, instructing communication devices having active connection to reconnect to the macrolayer, and causing the cell to bar establishment of further active connections.

In certain cases, useful for understanding the invention, this method may further comprise reporting that the aggregator cell is deactivated as a result of the change of mobility status.

The above aspects and/or examples may be implemented within a system, useful for understanding the invention, for providing an aggregator facility in a telecommunications network; the system comprising: a core network, CN; and a radio access network, RAN, which is configured to provide a backhaul connection to the CN and to provide wireless communication connections to radio communication devices; wherein the system further comprises: a first communication device, the first communication device having a first connection to the CN, the first connection path including a wireless connection between the RAN and the first communication device; a second communication device; and an aggregator controller, which communicates with the RAN and the CN and which is configured to instruct the second communication device to establish an aggregation connection to the first communication device and a second connection between the first communication device and the CN, wherein the second connection included the aggregation connection and the instruction is dependent upon performance conditions.

The second connection may be used instead of the first connection to the CN; alternatively the second connection may be used in addition to the first connection to the CN.

In certain examples, useful for understanding the invention, the aggregation connection is a wireless connection.

In certain examples, useful for understanding the invention, there are a plurality of first communication devices. Where there are more than one first communication device, the aggregation connection transports aggregated data from the first communication devices, the data from each first communication device being packetized for backhaul to the core network.

In certain examples, useful for understanding the invention, the second communication device may be a user equipment (UE) whose user has indicated that the UE may be dynamically assigned to act as an "aggregator".

In certain examples, useful for understanding the invention, the second connection further includes a second wireless connection to the RAN and the backhaul connection from the RAN to the CN. Where the second communication device is a user equipment (UE), the second wireless connection may be established using a SIM card specific to that device to authenticate the device to the CN.

In certain alternative examples, useful for understanding the invention, the second connection further includes a connection using at least one connection technology selected from: optical fibre cable technologies; Ethernet technologies; a fixed line xDSL technology; microwave backhaul technology; and/or a Wi-Fi technology. In the case of Wi-Fi technology, the connection may thus comprise a Wi-Fi section from second communication device to a Wi-Fi access point and a fixed line section from the Wi-Fi access point to the core network. Fixed line xDSL and optical fibre connections may be either direct or indirect; in the indirect case, the connection may be established via at least one intervening network entity.

In certain examples, useful for understanding the invention, the second communication device may be a dedicated communication device specifically deployed to act as an aggregator. Alternatively or additionally, the second communication device may be a small cell base transceiver station, for example, a home eNodeB (HeNB).

In certain examples, useful for understanding the invention, the aggregator controller is independent of the RAN. The controlling functionality (which could be implemented, for example, as a software) is thus placed in an entity that is typically external to the eNodeBs. This external entity is configured to establish a communication channel with selected terminals (or other communication devices) that are capable of acting as aggregators for other terminals in the network. When each of these selected terminals acts as aggregators for one or more other terminals in the network, the latter are connected to the CN via a secondary connection which is different from the primary connection they would have when connected with the CN via the RAN. These connections are primarily logical connections between the terminals and the CN. The secondary connection will include a communication channel between the selected terminal and the one or more other terminals in the network for which the selected terminal acts as an aggregator (hereafter, we will call the selected terminal "aggregator"). The aggregator will communicate with each of these other terminals and combine their communication streams before they are transmitted to the Core Network. In certain cases, the external entity is configured to establish further parallel communication channels with other communication devices: this may be useful when determining the locations of communication devices more generally rather than candidate aggregators alone, as may be needed in certain embodiments.

As a result, the system may be deployed without requiring bespoke adaptations of otherwise conventional eNodeBs to include dedicated software functionalities. The introduction of a separate controller entity means that the system may be implemented in association with any conventional macrocell layer deployment.

Furthermore the system requires neither changes in network architecture nor new stricter requirements in synchronization, backhaul, etc.

As a user may obtain (and to some extent control the positioning of) candidate aggregators, the users of the network may also benefit in that they are able to influence the overall coverage of the macrolayer by their own actions. In some instances, an aggregator placed close to a window (whether outdoors or indoors), can provide improved coverage indoors to UEs, giving a better link budget.

The use of such aggregator facility systems may have an advantage for legacy communication devices since they would gain access to potentially more up-to-date equipment in the deployed aggregator controller, thereby improving performance of such low-tier terminals in connecting to the macrolayer through the aggregator.

Location services may also benefit from the availability and/or presence of aggregator devices as each aggregator may be used as a further means to discover the positions of respective communication devices, thereby improving location accuracy.

In certain examples, useful for understanding the invention, the performance conditions upon which the instruction to the second communication device to establish the second connection depends include a metric of coverage quality and/or usage of resources in the network being greater than a threshold level. This metric may be a metric of a level of interference in the network. In particular, this level of interference may be one due to the use of the first connection. The threshold level is an estimate (which can be predetermined) of a level of interference due to the use of the second connection.

In certain examples, useful for understanding the invention, the instruction to establish an aggregation connection may be conditional upon performance conditions associated with the second communication device. This may be in addition to the metric discussed above. The performance conditions associated with the second communication device may include parameters associated with the connection between the second communication device and the RAN. The performance conditions associated with the second communication device may include at least one of SINR, received signal received power (RSRP), location information, and battery life.

In certain examples, useful for understanding the invention, or the aggregator controller may be further configured to process the performance conditions associated with the second communication device and, only if the parameters are determined to indicate that the second communication device is a candidate for assignment as an aggregator, to instruct the second communication device to establish the aggregation connection to the first communication device.

There may further be provided computer software, useful for understanding the invention, operable, when executed on a computing device, to cause one or more processors to perform a computer implemented method according to the above aspects of the present disclosure.

A further example, useful for understanding the invention, provides machine-readable storage storing such a program.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### Brief Description of the Drawings

Various embodiments of the present disclosure will now be described with reference to the accompanying drawings, in which:
Figures 1A to 1C illustrate a radio access network where certain communication devices are dynamically assigned as aggregators within a single cell;
Figures 2A and 2B illustrate a further radio access network where certain communication devices are dynamically assigned as aggregators within a multicell network;
Figure 3 illustrates the functional elements of an aggregator controller suitable for enabling, controlling and disabling an aggregator layer in the network architecture of Figures 1A, 1B, 1C, 2A and 2B;
Figure 4 illustrates the behaviour of nearby communication devices when the aggregator controller of Figure 3 enables an aggregator layer at a given aggregator;
Figure 5 illustrates the functional elements of a communication device suitable for use in the network architecture of Figures 1A, 1B, 1C, 2A and 2B;
Figures 6A and 6B illustrate certain operations of a controller entity in determining whether activation of an aggregator facility is supported;
Figure 7 shows a flowchart showing certain operations of a communication device associated with mobility status;
Figure 8 shows a flowchart showing certain further operations of a communication device associated with mobility status;
Figure 9 illustrates the use of EPS bearer as a transport layer for connectivity between an aggregator device and the core network;
Figure 10 illustrates a variation upon the arrangement in Figure 9;
Figure 11 illustrates the transmission of a message including information relating to the macrolayer profile of a UE offering aggregator services from the UE to a controller entity in accordance with an aspect of the present disclosure;
Figure 12 illustrates the exchange of messages between the UE and a controller entity concerning UE capabilities in accordance with a further aspect of the present disclosure;
Figure 13 illustrates the exchange of messages concerning access to a parameter database;
Figure 14 illustrates the exchange of messages concerning the setup of the UE as an aggregator in accordance with an aspect of the present disclosure;
Figure 15 illustrates the integration of the UE providing the aggregator functionality as a neighbour cell entity within the macrolayer network in accordance with a further aspect of the present disclosure ; and
Figure 16 provides a schematic overview of the flow of operations performed by a controller entity to initialise a given UE as an aggregator once it has been selected for activation in accordance with another aspect of the present disclosure.

### Detailed Description of Preferred Embodiments

The present disclosure relates to the integration of an aggregation service with existing wireless wide area communications provided in a telecommunications network architecture that includes a radio access network (RAN), a core network (CN) and a packet data network (PDN). Communication devices, such as mobile terminals, user equipment (UEs) and wireless access stations, establish wireless connections to the network by means of the RAN.

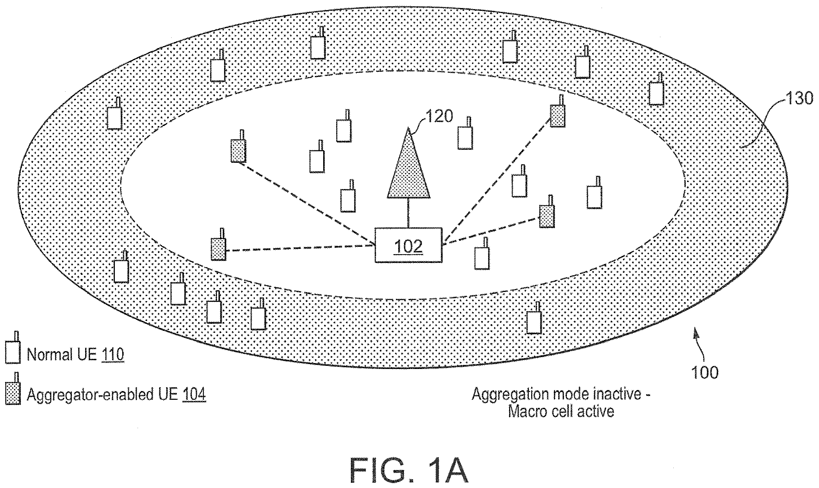

Figures 1A to 1C show a single cell 100 of the telecommunications network provided by a base transceiver station (i.e. macro eNB) 120 within the RAN. The telecommunications network architecture further comprises a network node, referred to as an aggregator controller (AC) 102, which communicates with the RAN and the CN (illustrated here as a link between the AC 102 and the eNB 120) but which may be implemented independently of the component entities of either RAN or CN.

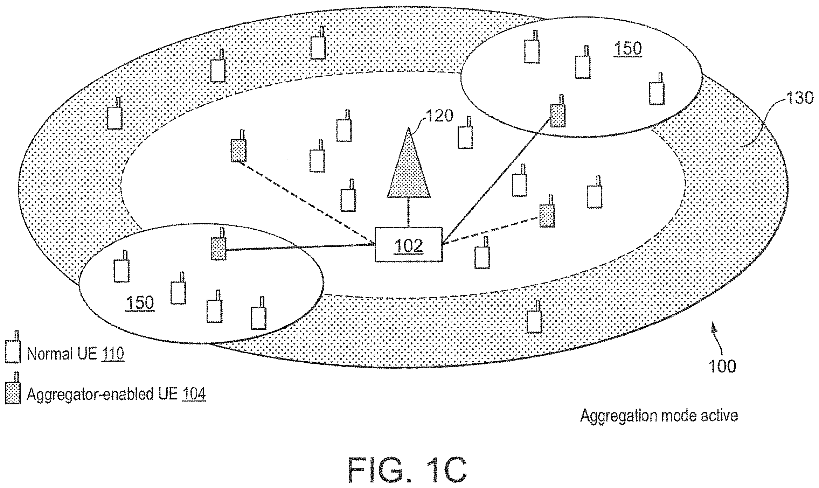

The AC 102 identifies at least one communication device 104 as candidate for assignment as an aggregator. The AC 102 also instructs any given aggregator candidate 104 to activate (or deactivate) an aggregator mode, whereby it provides base station functionality for nearby (mobile) communication devices 110: in Figure 1C, each activated, aggregator-enabled communication device 104 provides a respective aggregator cell 150. The AC 102 also determines whether any aggregator candidate 104 is activated at all at a given time in a given region of the telecommunications network. In Figures 1A to 1C, candidate aggregators 104 are illustrated as UEs: this is merely one example of a suitable communication devices 104, candidate aggregators may equally be dedicated communication devices or even small cell base transceiver stations such as HeNBs or femtocell eNBs.

The AC 102 is configured to interrogate one or more communication devices 104, where these devices are connected to the RAN (i.e. the eNB 120), to determine certain parameters associated with the device 104 and/or its connection to the RAN (e.g. SINR, reference signal received power (RSRP), receive signal code power (RSCP), location information, battery life, etc.). Data associated with the parameters is processed at the AC 102 and, if the parameters are determined to indicate that the or each communication device 104 is a candidate for assignment as an aggregator, the communication device 104 may be configured to implement an aggregator mode, whereby it provides base station functionality for nearby (mobile) communication devices 110.

Figures 1A to 1C also illustrate one scenario where the facility extending base station functionality to nearby (mobile) communication devices 110 is contemplated. As communication devices approach the furthest range of macrocell coverage in the cell (i.e. the cell edge, illustrated as shaded area 130), they consume more network resource. By selecting certain communication devices to act as aggregators, these devices being within good macrocell coverage but having the facility to extend base station functionality within an "aggregator cell" beyond the coverage of the macrocell layer, the network can deploy aggregators to address the problems of cell edge.

Certain network-connected communication devices 104 are thus used as a type of small cell entity. Network-connected communication devices assigned to perform this small cell-like functionality are termed "aggregators" because, where there are more than one communication devices 110 nearby a given network-connected communication device 104 in aggregator mode, the data traffic from the nearby communication devices 110, for each of the nearby communication devices 110, is buffered for transport (i.e. "aggregated") using a backhaul connection between the aggregator 104 and the core network. By aggregating the data from one or more nearby communication devices 110, the aggregator can both (a) assist in extending the network coverage to locations where (i) the macrolayer coverage is otherwise either temporarily or permanently inadequate or (ii) the macrolayer coverage is adequate but devices within a certain coverage area (e.g., cell edge) consume too many resources and (b) transport data over the RAN more efficiently. One of the advantages of buffering data from the nearby communication devices 110 is that the backhaul connection from the aggregator 104 (which may be considered as a single logical "pipe") can be made less "bursty" reducing signal resource consumption and reducing the overhead of the signalling.

Aggregators are typically, dynamically switched-on and off in dependence upon conditions affecting the performance of the network. These performance conditions include both network conditions (such as interference, load, etc.) and other conditions that could affect the performance of the system (such as the predicted level of activity in the cell at a given time or date, the presence and/or number of candidate aggregators in suitable locations, the distribution of UEs in cell edge locations, and/or the level of resource consumption by communication devices in the potential coverage area of respective candidate aggregators).

In certain cases, the coverage of the existing macrolayer is used for backhaul and a technology/band different from the one used for the backhaul is used as a radio interface for extending the coverage to nearby (mobile) communication devices 110. The coverage extension is therefore supplied to nearby communication devices 110 by aggregators operating "out-of-band" with respect to the macrolayer operating frequencies.

In one example, the macrolayer operates using LTE carriers at frequency bands around 800MHz or 1800MHz while the cell 150 provided by the aggregator to nearby communication devices operates at 2600MHz. In another example, the macrolayer operates using LTE carriers at frequency bands around 2600MHz using an FDD technology while the cell extension provided by the aggregator to nearby communication devices operates at 2600MHz in a TDD technology. Furthermore, the reader will appreciate that further out-of-band frequency bands may be available at frequencies for which no licence is needed, such as the 2.4GHz and 5GHz bands used by conventional WiFi technologies (i.e. compliant with the IEEE 802.11 family of standards) or in the near infrared and visible light spectrum used by light communications technologies such as visible light communications, VLC (sometimes referred to as "Li-Fi").

Aggregators (and candidate aggregators) may be fixed in a single location much as conventional small cell base station transceivers are: determining or obtain a location for such devices is essentially a matter of checking that this fixed status has not been altered. Equally and without loss of generalisation, it will be appreciated that in many instances aggregators (and candidate aggregators) are themselves mobile. While in certain examples, it is a requirement that the aggregator is static when active, it is also contemplated that the aggregator may be moved to another site and activated at the new site - such communication devices are referred to as "nomadic", as distinct from "fixed" devices. One specific example of a nomadic device arises when the candidate aggregator is installed in a motor vehicle, such as a commuter's car: the vehicle is driven from a home location (where it may be static) to an office location (where, after the journey is complete, the device may again be unmoved throughout the working day).

The AC 102 is a central logical entity (e.g. a server), which may or may not be integrated within the elements of the 3GPP Radio Access Network. The AC 102 monitors conditions affecting the performance of the network to assist in deciding which UEs 104 (or other network-connected communication devices) will act as aggregator.

Certain implementations of the AC 102 obtain information from all network-connected communication devices in a given sector before determining which of these devices can act as aggregators by virtue of the device status and current location. This determination is repeated for respective sectors at intervals of time: in certain cases, the intervals are equal in duration, while in others, the intervals are of variable duration and may be adapted to the known or predicted behaviour of communication devices using the network.

The AC may further repeatedly determine whether, on a set of basic criteria (i.e. performance conditions such as the network conditions, the current location and status of communication devices, etc.), any devices in a given sector should enter into service as aggregators at all. The criteria may include a measure of the comparative benefit of introducing an aggregator facility compared to having no aggregator facility in a given sector.

The AC is capable of establishing, maintaining and deactivating communications with the candidate aggregators, i.e. those UEs or other network-connected communication devices determined to have the capability to act as aggregators. This capability (provided through an application layer carried over the user plane of the macro layer, for example) allows the AC to:
- obtain information from all the UEs that can act as aggregators 104, this information may include performance factors such as location and its accuracy, supported RATs and related technologies (such as conventional WiFi technologies, VLC technologies, etc.), supported operational frequency bands, battery characteristics, status, and current battery drain consumption; and/or
- provide commands to the aggregators 104 such as: commands to set-up an aggregator control layer using some specific algorithm depending upon performance conditions such as those obtained from the aggregators 104, to select the RAT/band to be used in such a layer, to start transmission, to send handover commands to the aggregated UEs (i.e. the nearby communication devices 110 served by the aggregators 104), to stop transmission, and/or to send information to the aggregator control layer.

In certain implementations, the AC 102 might communicate with the LTE eNodeB or 3G RNC in order to "move", via handover to a specific RAT/frequency, a terminal (or other communication device) that is set to act as an aggregator 104. This move may be a change in serving cells: in such cases the communication with the LTE eNodeB or RNC is a request for a handover of the aggregator 104 from a current cell to a neighbouring cell: communication with the eNodeB or RNC is necessary then since handovers are under the control of the LTE eNode (for 3G, the control is done by the RNC). The move might also be a forced reselection: in which case communication with the LTE eNodeB would be unnecessary.

In certain implementations, the AC 102 may establish a further direct communication with "normal" UEs 110 (i.e. those communication devices not currently assigned to act as aggregators). This direct communication may be through a preinstalled application, for instance, configured to gather further performance information such as the strength/quality of received signals in the cell 100 in which the normal UEs 110 are camped/connected, and/or data on the strength/quality of received signals in other RATs/band, and/or location information.

In certain implementations, the aggregation enabled communication devices 104 (i.e. aggregators or candidate devices) are also relay nodes. Such devices may transfer data for one group of network-attached communication devices as a conventional relay node, while serving another group of network-attached communication devices as an aggregator.

The aggregator 104 is distinct from a typical relay node in a number of respects. Firstly, relay nodes are tied to a particular donor cell. They are presumed to be static and entirely under the control of the network operator via the eNB providing the donor cell. Furthermore, relay nodes are typically operated using radio resources allocated to them by the donor cell and are thus integrated in the scheduling for the macrocell. In logical terms, a connection from a communication device to the core network via a relay node is the same logical connection as that between the communication device and the core network via the donor eNB: resource that would be allocated within the macrolayer for the direct connection from communication device to eNodeB is instead allocated to the indirect connection via the relay unit.

The macrolayer (i.e. provided by eNB 120) and the aggregator 104 provide separate logical connections between the Core Network and communication device 110, with the aggregator 104 being "configurable" to provide this connection. Whereas the relay node provides an alternative physical route provided the communication device camps on the relay cell rather than the donor cell, the AC 102 ensures that the network can control whether a given candidate (or group of candidates) for aggregator is enabled (i.e. enters into service as an aggregator) and thus determines the conditions under which the communication device switches between a connection established by the RAN and a connection established by the aggregator (when instantiated).

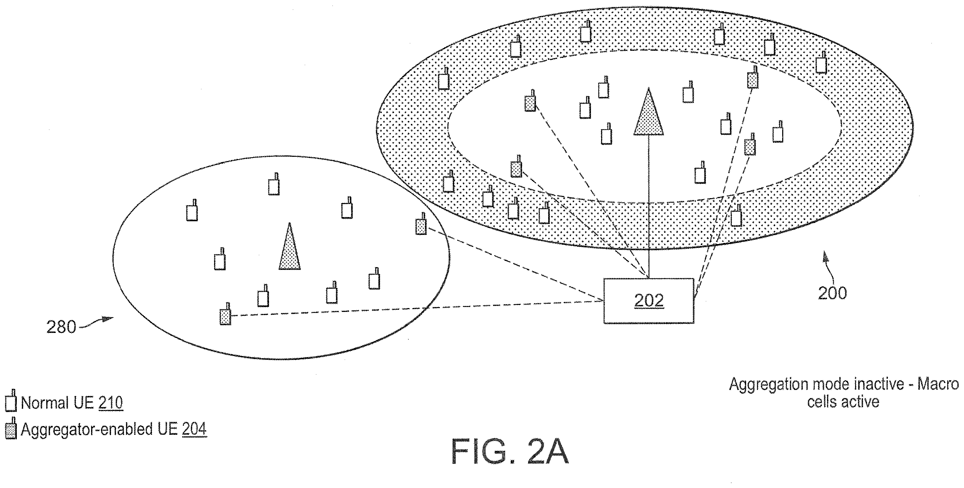

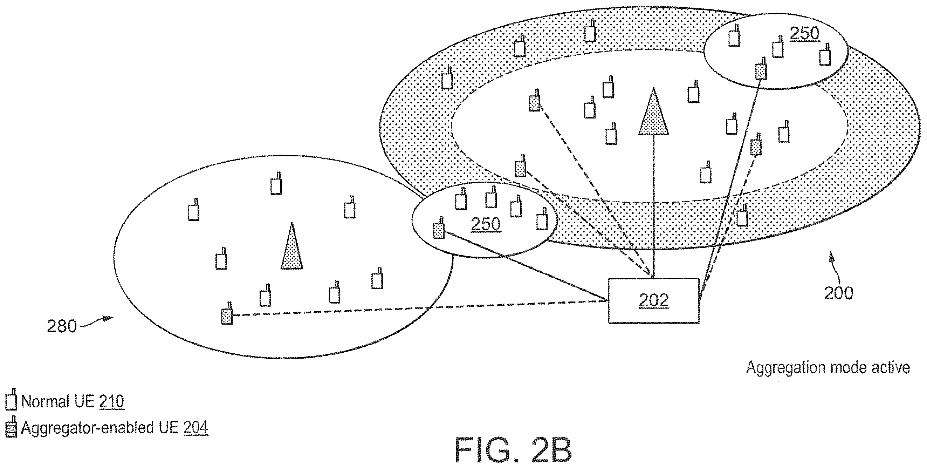

Figures 2A and 2B illustrate a further radio access network where certain communication devices are dynamically assigned as aggregators within a multicell network. This scenario demonstrates that the aggregator is not however merely a "temporary" base transceiver station. As the aggregator is activated and deactivated ad *hoc* (i.e. opportunistically) based on the need of the RAN as a whole, it is contemplated that certain communication devices 204 camped on neighbouring cells 280 could be assigned aggregator status: in Figure 2B, each activated, aggregator-enabled communication device 204 provides a respective aggregator cell 250.

Such aggregators 204 can be arranged to provide more effective base station functionality to communication devices in the cell 200 currently serving a conventional communication device 210. While that aggregator 204 would normally be outside the reach of the serving cell 200, it can nevertheless be activated, via the AC 202.

As the AC 202 need not be associated specifically with a given cell 200, but rather with a network that may include a plurality of cells (200, 280), the AC 202 is adapted to view the network holistically. By activating aggregator facilities 204 that sit outside the (macrolayer) coverage of a cell 200 yet still serving communication devices 210 within that cell 200, the AC 202 may still deliver an overall benefit to the network.

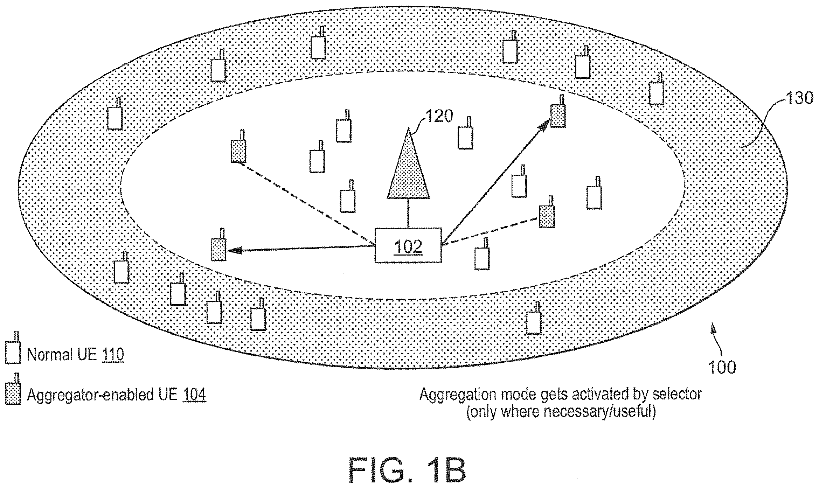

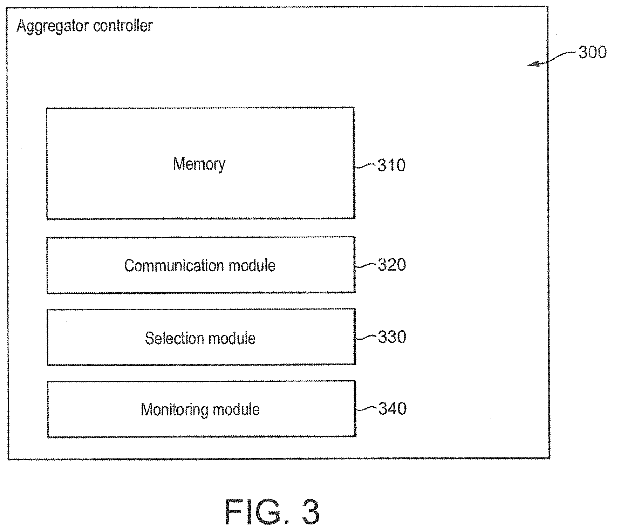

Figure 3 illustrates the functional elements of an aggregator controller 300 suitable for enabling, controlling and disabling an aggregator layer in the network architecture of Figures 1A, 1B, 1C, 2A or 2B. These functional elements may be implemented as software routines and/or as dedicated hardware units, these elements being substantially interchangeable.

The functional elements include a communication module 320 for obtaining information from potential aggregators by establishing communication via an application layer with these devices. The information obtained contributes to the factors affecting the performance of the network upon which the establishment of a connection between aggregators and nearby communication devices depends and may include: current location (e.g. location information derived from global or regional satellite positioning systems, such as Global Positioning System, GPS, GLONASS, BeiDou/COMPASS, IRNSS or Galileo)); historical information (covering, for example, the last two weeks) of the location of the candidate aggregator; level of physical mobility at present (i.e. whether moving or not); a measure of LTE radio coverage in the macrolayer; an indicator of battery level, current consumption, expected remaining battery etc.; information concerning neighbour cells of the aggregator, in respect of the connection between the aggregator and the macrolayer RAN; and a measure of the improvements (or otherwise) expected, after switching on an aggregator layer in a specific region of the radio network, the improvements being measured in terms of latency (i.e. data waiting time), for example. This information may be made available in the application layer through an aggregator client application executing on the respective aggregator candidate devices.

One reason for obtaining such information relates to the nature of the devices that are candidates. It is likely that many of the candidate aggregators are in fact "nomadic", changing (i.e. commuting) between two or more static locations over a period of hours or days. Thus for many candidate devices the characteristics of the network will change as they move within the network: a communication device that is a suitable candidate aggregator at a given location, X, and a given time, T, may not be suitable elsewhere, X + x, at a later instant, T + t: specifically if the location is close enough to extend an aggregator cell to the (macrolayer) cell edge at T, but out of range of the cell edge at T + t. Thus the controller 300 needs to obtain this information to inform decisions as to whether the communication device is (currently) a candidate aggregator and whether, if a candidate aggregator, it should be activated/deactivated as an aggregator.

Optionally, the communication module 320 may be configured to obtain additional information from communication devices other than aggregators; this additional information being analogous to the information obtained from candidate aggregators and similarly contributing to the factors affecting the performance of the network upon which the establishment of a connection between aggregators and nearby communication devices depends. A specific non-aggregator client application may be installed in some or all of the communication devices within a network to provide this additional information.

The communication module 320 may also be configured to obtain macrolayer information (i.e. data concerning network conditions) from the macrolayer concerning the current level of resource consumption of the schedulers, coverage maps and (if available) real time traffic maps.

The functional elements include a selection module 330 for selecting (and communicating to) the aggregators that have to start the transmission of an aggregator cell and for determining which of the supported technology/frequency bands the selected aggregators is to use in operation.

A monitoring module 340 is also provided to evaluate performance conditions (such as the network conditions and other conditions affecting performance) to determine which of the currently selected aggregators will continue their transmission.

In cases where a change in aggregator is indicated by the monitoring module 340, the selection module 330 may be further configured to select (and communicate to) those aggregators which should stop their transmission (and thereby cease to be in service as an aggregator).

When enabling an aggregator layer in a given sector or cell of a radio network, the aggregator controller first instructs one or more communication devices (preselected to act as aggregators) to start radiating coverage (i.e. to implement an aggregator "cell").

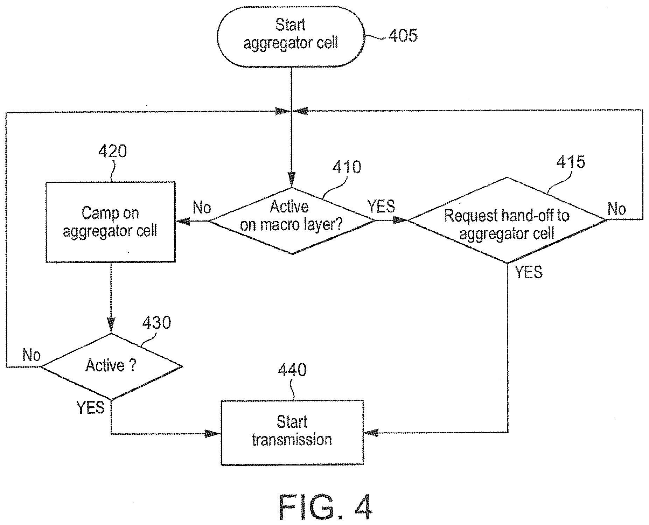

In Figure 4, the activity of communication devices nearby an active aggregator are illustrated. Once a given aggregator starts radiating coverage to its own cell 405, the behaviour of nearby communication devices adapts accordingly.

Nearby communication devices (i.e. terminals, such as UEs) that are in idle mode will automatically camp on the newly established aggregator cell 420 (by virtue of the conventional idle mode reselection of the cell with the strongest signal strength coupled with the prioritization of LTE layers broadcast by the LTE eNodeB). If the nearby idle device thereafter enters an active mode 430, transmission starts (or does not start) over the aggregator cell 440. Where there is an ongoing existing connection through the macrolayer of the RAN (i.e. it is determined that the nearby communication device is active on the macrolayer) 410, the RAN may optionally, upon request from the aggregator controller, move (i.e. hand-off) the ongoing communication of the respective nearby device towards the aggregator cell 415. If such a request is made, transmission starts (or proceeds) over the aggregator cell 440.

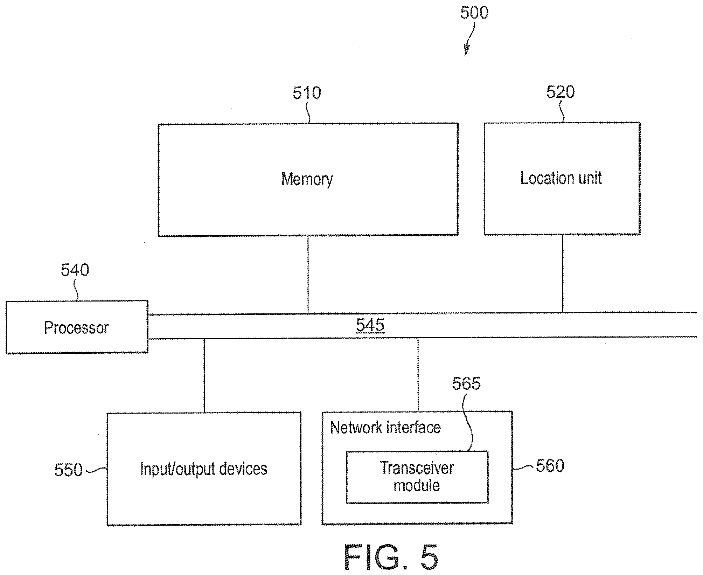

Figure 5 illustrates the functional elements of a communication device 500 suitable for use as an aggregator in the network architecture of Figure 1A, 1B, 1C, 2A or 2B.

The communication device 500 includes a memory 510, location unit 520, a processor 540, input/output devices 550 and a network interface unit 560 having a transceiver module 565. Data is transferred between the various components via a bus 545. To operate as an aggregator, the network interface unit 560, through its transceiver module 565 must be capable of establishing two separate network interfaces: a backhaul interface and a coverage extension interface. In certain implementations, the transceiver module operates in at least two sets of frequency bands: one set of bands that correspond to the RAT of the macrolayer and a further "out-of-band" set of frequencies not used by the RAT. In some cases, communications on the "out-of-band" set of frequencies use a different RAT from the macrolayer.

In certain implementations, the backhaul and the coverage extension interface might use the same working frequency/RAT as a conventional relay node in order to facilitate the deployment of multi-hop scenarios, in which chains of Radio Access Network entities are deployed. For example, a first aggregator may appear to other communication devices as a Donor eNodeB and a second aggregator may appear to the first aggregator as a conventional UE while providing its own cell to nearby communication devices appearing to them as a conventional Relay Node.

Clearly the backhaul connection from the backhaul interface of the communication device 500 need not be a cellular wireless connection and may include non-cellular wireless and/or a fixed line connection using a connection technology such as: optical fibre cable technology; ethernet technologies; a fixed line xDSL technology; microwave backhaul technology; visible light communications, VLC and/or a Wi-Fi technology.

As noted previously, it is anticipated that many of the candidate aggregators move between two or more static locations over a period of hours or days. It is therefore important that the communication device 500 can, using data obtained from the location unit 520, provide adequate reports of changes in location, which may in turn inform the controller's decisions as to whether the communication device is considered a candidate aggregator and whether, if a candidate aggregator, it should be activated/deactivated as an aggregator.

The location unit 520 may include a global navigation satellite system (GNSS) unit, such as a global positioning system (GPS) unit or the like to provide location information for the communication device 500 as well as cell synchronization if other methods are not available. Alternatively or additionally, the location unit 520 may obtain a location "fix" by inference from the RSRP together with knowledge of the location of cell sites in the macrolayer.

By obtaining a plurality of location fixes of the communication device 500 at different (known) times, the communication device 500 can determine its current mobility level. The mobility level may be determined as a binary determination, i.e. the device may be "static" or "non-static": clearly however a non-static mobility level can be more finely distinguished by characterising the degree and nature of the mobility situations, e.g. semi-static/nomadic scenarios, high mobility, static relative to others (yet changing location), etc. Alternatively, the communication device 500 may report each location fix (together with a time stamp) to the controller and the controller may determine for the current mobility level of the communication device 500. In the latter case, the persistent reporting of location fixes may incur a higher cost in terms of battery usage necessary to facilitate the transmission of such reports.

In certain examples, the communication device is not considered a candidate aggregator device if the mobility level is not "static". In other cases, there may be non-static mobility states which nevertheless qualify the communication device to be considered a candidate aggregator device (for example, the detected movement may be determined to be at a speed lower than a predetermined threshold speed, or the change in location may be within a limited geographical area). In the latter case, the controller may determine that an alternative pattern of operation (such as the selection of aggregator selection routines that are more suitable for such qualifying non-static situations) may be needed to ensure effective use of communication devices having qualifying mobility statuses.

While not shown, the communication device 500 may be powered from a battery - such as a rechargeable Li-ion battery, conventional in the field of portable cellular communication devices, such as smartphones. The level of that battery may conveniently be monitored. Alternatively or in addition to the mobility criteria discussed above, the communication device may be rejected as a candidate aggregator device if the monitored battery level drops below a battery level threshold.

In the present discussion, it will be readily apparent to the reader that many alternative and complementary factors may be used to determine whether a given communication device may be considered ready to act as aggregator: mobility status as discussed above is one of a number of useful criteria upon which readiness may be determined. Indeed, mobility status as illustrated - where a simple dichotomy is made between "static" and "non-static" status - is clearly a simplification of a more complex determination of a plurality of categories of "mobility status" (which might span multiple degrees and or types of "mobility", for example).

For a device to be determined to be "aggregator-ready" it must fulfil certain physical criteria (e.g. being switched on, capable of receiving and sending signals according to an appropriate protocol, etc.) and fulfils one or more criteria for suitability: for example exhibiting a mobility status that permits effective aggregator operation. Battery life is a significant example of a physical criteria which would also be considered to determine readiness to act as an aggregator.

Even if conditions exist that suggest it would be possible to deploy one or more aggregation layer in a cellular communication network, there must be a good reason to decide to set-up an aggregator layer: in essence there needs to be some tangible expected benefit in doing so rather than persist with the normal macrolayer operation.

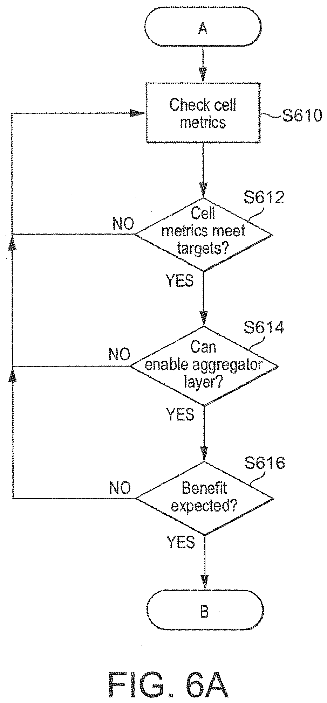

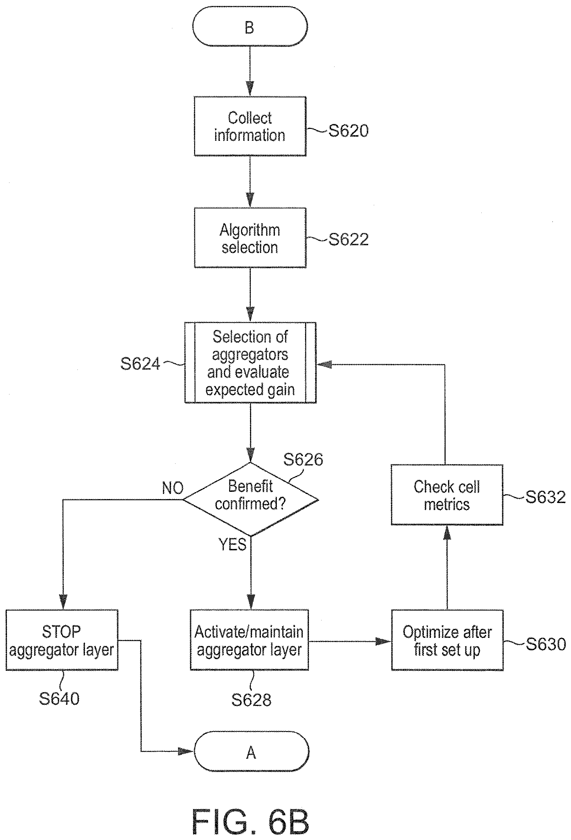

Figures 6A and 6B show a flowchart of certain operations performed by a controller entity in determining whether activation of an aggregator facility is supported.

At operation S610, the controller obtains values for one or more cell or user related metrics, referred to hereafter as "cell metrics", thereby checking the performance of the macrolayer. The cell metrics may include for example, measurements of: cell load (for instance, resource block (RB) usage), cell throughput, number of active communication devices located in predefined portions of the cell coverage area, a "happiness" value for the users (measured latency in data transfer, uplink waiting time, or a value obtained by inference from user feedback in social network services, for example); and/or control resource usage (e.g. PDCCH usage).

The cell metrics provide a measure of performance of the macrolayer that is used in determining whether the conditions in a given area of radio coverage offered by a cellular communication network support the activation of an aggregator facility. Here the given area of radio coverage may be selected from: a macrocell coverage area for at least one macrocell within the cellular telecommunications network; a coverage area for at least one sector within the macrolayer of the cellular telecommunications network; and the coverage area of the entire cellular telecommunications network.

In certain cases, the controller may be configured to define the given area of radio coverage which is to support the activation of an aggregator facility by identifying a subset of available cells for which one or more cell parameter conditions hold, e.g. more than a given number of cells in the subset have a cell metric and/or user metric lower than corresponding threshold value. This might result in the area of radio coverage which is to support the activation of an aggregator facility being a subset of the cells in the cellular network covering an entire city.

In Figure 6A, for example, this determination involves two distinct stages: operation S612, which deals with certain conditions hold that would make activation of an aggregator facility desirable (even necessary), and operation S614, which deals with further conditions which would determine whether such a facility would be feasible. In alternative approaches, the conditions that support activation of an aggregator facility may be performed in other ways, in particular operations S612 and S614 may be performed in parallel with one another or in "reverse" order; furthermore, all conditions may be assessed in a single procedure based on the cell metrics.

At operation S612, the controller determines whether the cell metrics meet target threshold values. This operation may include: determining whether cell load (i.e. RB usage) exceeds a load threshold while throughput lies below a minimum throughput threshold; determining whether the number of users in a region of the cell (such as the cell edge) exceeds a user number threshold while throughput per App falls below a minimum App throughput threshold (an App is a software application executable on a user's communication device: Apps that rely upon network connectivity may be affected if the throughput allocated is below some threshold, for instance, a video streaming App with a throughput lower than 300kbps would provide an inadequate display output); determining whether a happiness metric (whether aggregated for a number of users or a group of users or not) lies below a happiness threshold; and/or determining whether the usage of control resources (such as PDCCH) exceeds a control resource threshold.

If the cell metrics meet the target threshold conditions, the controller concludes that necessary conditions for aggregator layer deployment hold and moves to operation S614.

At operation S614, the controller determines whether certain conditions sufficient for aggregator layer deployment hold. The controller thus determined whether effective aggregator layer deployment will be possible. Operation S614 may include determining:
whether there are aggregator enabled communication devices (i.e. candidate aggregator devices) in the cell and whether these communication devices have certain characteristics in terms of mobility (e.g. they are, have been for an amount of time, and/or are expected to be, "static");
whether there are communication devices (aggregator enabled or not) in one or more macrocells with certain characteristics in terms of mobility (e.g. they are, have been for an amount of time, and/or are expected to be "static");
whether the controller has access to data concerning path loss towards the macrocell and/or amongst communication devices (e.g. UEs/terminals) and/or location information of the aggregators and/or the other communication devices;
whether there are communication devices in coverage of potential aggregators;
whether there is a matching between the capabilities (technology/band supported) between aggregators and nearby communication devices;
whether at least some of the aggregators have sufficient battery life to maintain aggregator functionality for a predetermined period of time;
whether conditions of low interference hold; and/or
whether spectrum and technology resources needed for use in deployment of the aggregator layer are available.

If the controller concludes that sufficient conditions for aggregator layer deployment hold, the controller next performs operation S616. In certain alternative approaches, the controller performs operation S616 before or in parallel with the operations at S612 and/or S614.

In operation S616, the controller makes a preliminary determination of whether a benefit for the network would be expected if the network were to deploy the aggregator layer. This preliminary determination considers a limited number of properties of the cell metrics obtained at operation S610 and thus relies upon a subset of the information necessary for aggregator layer deployment: for instance, a benefit at this stage would be expected because there were several static users at cell edge under the potential coverage of some static aggregators or because there are small cells with unused capacity in an area close to some static users but with aggregators located in their coverage area.

If it is determined that either necessary conditions (at operation S612) or sufficient conditions (at operation S614) are not present, the controller waits a predetermined period of time (by setting a timer for example) and then obtains a further set of cell metrics (at operation S610). Likewise, should it be determined that no benefit is expected from the deployment of the aggregator layer (at operation S616), the controller will again return to operation S610 and obtain a further set of cell metrics.

If however, at operation S616, the controller makes a preliminary determination that there would be an expected benefit, in principle, for the network if the aggregator layer were to be deployed, the controller initiates a more detailed phase of operation (illustrated in Figure 6B) by collecting further performance information, operation S620 (in addition to the cell metrics obtained at operation S610).

During the collection of further performance information, operation S620, the controller obtains a list of aggregator enabled communication devices (i.e. candidate aggregators) currently camped within a given macrocell, using information updates received, at temporally spaced-apart intervals, from the aggregators. In addition to the list of candidate aggregators, the further performance information may include some or all of the following information obtained from the respective aggregators:
- location (of the updating aggregator). This location information may be obtained by the aggregator by inference from the RSRP and/or using a GPS unit.
- pathloss/SINR (measured at the updating aggregator). This may be with respect to the current macrocell or a set of macrocells.
- mobility level (static or not) measured by the aggregator itself
- information on location and/or pathloss of all UEs or other network connected communication devices that are static (optionally, this may be filtered to relate only to UEs that are static and that in addition are expected to remain static by analysing and using geolocalized historical information of the UE) and that are camped/or are/have been connected there

The controller processes some or all of this performance information to evaluate the relative distance and pathloss/SINR (or similar quality) between candidate aggregators and the devices of users in the cell.

In certain examples, the controller makes a selection of aggregators from among the aggregator enabled communication devices in accordance with a single aggregator selection algorithm. In other embodiments, there may be a plurality of available aggregator selection routines (i.e. algorithms) and it is first necessary to determine which routine to adopt. When required, the operation of determining which routine to use may be any conventional selection operation.

Figure 6B illustrates one example where a plurality of aggregator selection routines are available. Here, the available respective aggregator selection routines may each be suited to respective, different performance conditions. In operation S622, an algorithm corresponding to one of these routines is determined depending upon the availability of specific further performance information, such as aggregator location information or pathloss measurement data. In cases where only a single aggregator selection algorithm is available, the determination of which algorithm to use is trivial and operation S622 may be omitted.

Once it is determined which routine (i.e. algorithm) is suited to the available further performance information, this algorithm determines which, if any, aggregator enabled devices should be activated for aggregator functionality and defines the sub-processes by which benefit (i.e. achievable gain) from aggregator layer deployment will be calculated. The algorithm thus serves to select aggregators from among the candidate aggregators for deployment of the aggregator layer. The operation of this algorithm is illustrated as operation S624 in Figure 6B.

At operation S624 (whether this is the only available aggregator selection routine or a routine determined to be suited to available further performance information at operation S622), the controller makes a selection from among the aggregator enabled communication devices, this selection being a selection of one or more aggregators based either on individual characteristics of the respective, selected aggregators or collective characteristics when the selected aggregators are considered as a group selected from among the aggregator enabled communication devices.

While the present embodiment contemplates the use of a single aggregator selection routine within a single area, this does not preclude the use of more than one selection routine - for example, the use of a first aggregator selection routine during peak hours of the day or week and a second aggregator selection routine at other times. Furthermore, it is equally contemplated that where two areas of radio coverage are considered separately, each area may adopt a respective, different aggregator selection routine consistent with the information relative to candidate aggregator devices that can be obtained.

It is thus possible that the choice of aggregator selection routine may be fixed based on empirical knowledge (using routines for which sufficient information has been available historically, because the penetration of terminals supporting a network operator client application has become sufficiently high, say) or dynamic (based on how much information is currently available for each routine).

It is further contemplated that the choice of which selection routine to adopt may be governed by a quality metric of the effectiveness of any given routine as a function of the amount of relevant information that can be collected. By obtaining information that might be used by one or more of the possible routine and discarding the routines for which available information is such that that their quality metric is too low, the routine whose quality metric implies it can provide the highest gain for the network would then be chosen.

In certain examples, the selection of aggregators includes the selection as a group from some or all possible different groups or subsets of aggregator enabled communication devices, each group being termed an "evaluation group". An expected gain for each evaluation group is then calculated.

In other examples, the selection of aggregators is the selection of individual devices (i.e. subsets of aggregator enabled communication devices having a single member each). Here, expected gain is calculated for each individual candidate aggregator.

The expected (achievable) gain results from an evaluation of the expected improvement in a given cell metric: this cell metric may be the, or one of the, cell metrics obtained at operation S610. For example, the expected gain may be the result of a comparison between a) the value of that given cell metric when the or each aggregator is selected and b) the currently experienced (i.e. measured) value of that cell metric.

In certain cases, the expected gain may be expressed as the difference between the value of a given cell metric predicted for a given evaluation group (evaluated before actually activating that group for aggregator functionality) and the current value of the given cell metric. Where no aggregator enabled communication devices are activated, the current value of the cell metric is the measured value of the cell metric for the cellular communication network where no aggregator functionality is activated. Otherwise, the current value of the cell metric is the measured value of the cell metric for the network where a current group of aggregator enabled communication devices are activated for aggregator functionality, said current group need not be the evaluation group. The prediction of the cell metric may be a function of the further performance information collected at operation S620.

Where expected gain is determined for evaluation groups or individual candidate aggregators, the aggregator selection algorithm then assesses the respective expected gains for some or all possible different aggregators or groups of aggregators, the selected aggregator or group of aggregators may be the individual or group providing the greatest expected gain. Alternatively, the selected aggregator or group of aggregators may be selected from a subset of groups having gains that exceed a threshold gain, taking account of other practical constraints such as maintaining aggregators that are already active unless there is a good reason to stop them (e.g. battery level dropping below a level that can support continued operation or detected movement of the active aggregator).

At operation S626, the controller makes a full determination of whether a benefit for the network would be expected if the network were to deploy the aggregator layer by modelling network performance for a network with the selected aggregator or group of aggregators activated and comparing that performance to the currently measured network performance information (as collected at operation S620).

In the case of the aggregator selection using evaluation groups, the full determination of benefit for the network entails comparing the expected gain from the use of the selected evaluation group of aggregators to data representative of the current network performance.

In a specific example where one of the selected subsets of aggregators is not currently active, sufficient benefit from first activation of that selected subset would be confirmed where the measured value of a given cell metric (assuming the given cell metric is the one used in the algorithm at operation S624) is significantly higher than that cell metric measured before the activation.

In another example where the aggregator layer is activated (i.e. at least one subset of aggregator enabled communication devices are activated for aggregator functionality), sufficient benefit is confirmed when the gain is higher than one of a reference average metric (e.g. historical data) or a cell metric measured in the previous last N iterations, where N is an integer greater than 1.

In certain cases, a measured value of a first metric (metric A) is used before activation, whereas after activation, a second, different, metric (metric B) is used instead. Known pre-activation network performance indicators (often referred to as KPIs - or key performance indicators) are used in order to evaluate metric A. Estimated values of metric A are compared to known measured values of metric A, to indicate whether the network needs assistance and to deduce that activation of the aggregator layer will provide that assistance. After activation, metric B may be calculated using both the stored KPIs pre-activation, and the current KPls measured after activation. If metric B after activation is sufficiently better than metric B before activation, the aggregator layer is maintained active.

If the determination at operation S626 is that a net benefit is indeed provided by deploying the selected device or group of devices (i.e. subset) as the aggregators, the controller activates an aggregator server (operation S628) to support the aggregator layer and instructs each of the selected communication devices to activate (or maintain active) their respective aggregator functionalities (e.g. by executing a routine in an aggregator client application). These aggregator functionalities include functionalities consistent with operation as a MiFi architecture access point (offering WiFi protocol and/or VLC connectivity to nearby communication devices) and/or as a small cell (offering connectivity using a cellular telecommunications standard).

While not illustrated in Figure 6B, the controller may conveniently launch a RAT selection routine to determine which carrier bandwidth/RAT/band will be used by each (selected) aggregator, the carrier bandwidth/RAT/band being chosen from among one or more permutations of available RAT, band, and carrier bandwidth available for the implementation of an aggregator layer in a specific cell. For instance, the RAT selection routine may determine that as LTE FDD2.6 is not used in current and/or neighbour macrocell, it can be used by all selected aggregators within range of those cells.

As discussed in relation to Figure 4, nearby communication devices may transfer some or all of their data traffic to the selected aggregator(s) differently depending upon whether they are in an "idle" or "connected" state.

In the former case, handoff of idle devices may be facilitated by the controller modifying the neighbour cell list (NCL), which is provided to devices in idle modes, with the parameters of the selected active aggregators.

In the latter case, the controller may determine whether to request a handover for a device in connected state when information such as radio measurements from communication devices in the macro cell compare unfavourably with radio measurements from communication devices using the selected aggregators (always providing such information is available at it might be from access to the relevant RRM function of the eNodeB/RNC in the macrocell). Examples of communication devices for which a handover might be requested include those devices: a) that are in the coverage area of a specific aggregator(s) and b) that have channel quality indicator (CQI) and/or RSRP in relation to the macrocell that is worse than the one of the aggregators.

While not illustrated in Figure 4, the aggregator may alternatively (or additionally) offer WiFi protocol and/or VLC connectivity to nearby communication devices (thereby operating as a MiFi architecture access point). In such cases, handoff onto the aggregation functionality may be effected by informing respective nearby communication devices which aggregators offer an access point in the cell and by commanding those communication devices close to the identified access points to enable Wi-Fi transmission.

Optionally, the controller may then seek to optimise the aggregator layer, operation S630.

Optimization by the controller may include at least one of the following procedures:
- checking, once a given nearby communication device is connected to an aggregator, whether that device has a worse CQI/SINR/RSRP with respect to the the macrocell than with respect to the aggregator, and in such a case will be (or can be) handed over to the Macro layer (e.g. by issuing a handover command or releasing the aggregation connection with redirection). Conveniently the selection parameters for this device would be changed for an amount of time to avoid unwanted ping-pong effects (i.e. hysteresis);

- checking the performance in the aggregator layer against the performance that would be expected if a given communication device were to stay in the macrolayer, depending on which information can be made available to the controller and/or to the aggregator. Examples of the performance information that may be checked include measures of user happiness metrics such as: latency (i.e. the round trip time (RTT) for transmitted and received packets or uplink waiting time. Examples of the performance information that may be checked may also include: historical data (such as throughput for specific Apps) obtained in the macrolayer in similar or same location and under the same or similar RSRP/CQI conditions;
- checking the level of interference and/or availability of resources for the spectrum/technology used in the aggregator layer and taking actions to improve these parameters (e.g. create clusters of spectrum/technology utilization, reduce utilization of those resources in the macrolayer); and
- optimizing the selection of aggregators taking account of mobility. The aggregators themselves may be required to take certain actions when aggregated users (i.e. communication devices using the aggregation facility of a selected aggregator) start mobility. Likewise, when aggregators themselves become mobile, the controller may act to alter the performance of the aggregator later, e.g. by instructing the newly mobile aggregator to switch off aggregation functionality.

Checking the performance in the aggregator layer using RTT may involve comparing RTT for the same packet using macrocell and current aggregator layer service respectively. Using uplink waiting time to check performance may involve comparing this time before and after the optimization.

Checking the performance in the aggregator layer using historical data may involve comparing historical data to actual data obtained through the aggregator. It is also possible to run periodical speed tests just to check the current quality.

Whether optimised as described or not, the controller iterates back through operations S622, S624 and S626, selecting one or more aggregators which may be identical to the aggregator(s) selected in previous iterations or may represent a group having a different constitution of aggregator enabled communication devices.

Periodically, cell metrics are checked - operation S632 - and this information is used in further iterations of operations S622, S624 and S626. The cell metrics checked here may be the same as those obtained at operation S610: equally they may be different from those cell metrics.

If the determination at operation S626 is that a net benefit is not in fact provided by deploying the selected devices (or group of devices) as aggregators, the controller halts the use of the aggregator layer operation S640. This may entail instructing all aggregator enabled communication devices in the cell to deactivate their aggregator functionality and to deactivate the aggregator layer server in the controller.

After a second predetermined time (typically longer in duration than the period characteristic of the iteration of operations S622, S624 and S626), the controller restarts first phase of determining the preliminary benefit of aggregator layer deployment at operation S610.

To provide the information needed by the controller to perform the operations described in Figure 6A and 6B, communication devices are arranged to present information upon which the controller can make its respective determinations of suitability of the device as a candidate aggregator and whether a suitable candidate is to be activated (or deactivated).

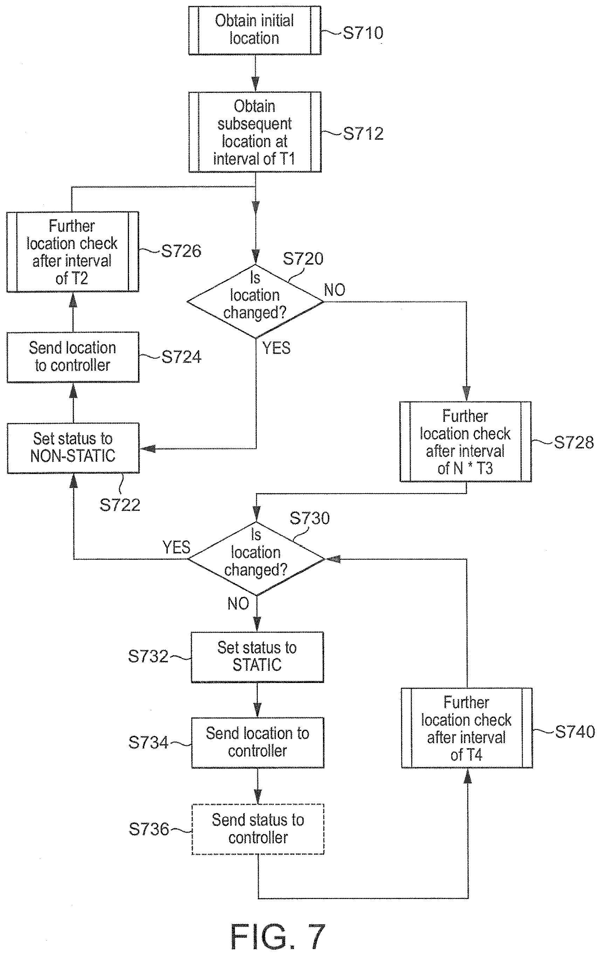

Figure 7 shows an exemplary flowchart showing certain operations of a communication device in accordance with an aspect of the present disclosure.

In Figure 7, the communication device evaluates its current location at temporally spaced-apart intervals (e.g. every T1 seconds). Once there are at least two measures of location (i.e. location fixes) it is possible to determine whether there has been any change in the mobility state of the communication device. Any given location fix is conveniently obtained with a minimum level of accuracy. The time difference between the acquisition of the location fixes is used to determine the degree of mobility (if any) between two fixes. To ensure that fixes are sufficiently far apart in time for a significant movement to be detected each fix is conveniently associated with a corresponding time stamp (which may be acquired from a connected macrocell and/or within the GPS signalling structure). Where more than one communication device is used it is contemplated that they may be operated in a synchronised manner.

An initial location fix is obtained at time T0, operation S710. At a point in time T1 seconds later than T0 a further location fix is obtained, S712.

The location fixes T1 seconds apart are compared to determine whether there has been a change in the detected location, operation S720.

In other examples, the algorithm used to determine whether a change in location has occurred may alternatively or additionally use parameters other than reported position and time, for example direction of movement or altitude.

In general terms, a potential aggregator may be considered to have moved (i.e. changed from a "static" state to a "non-static" state) if its position is displaced by a distance of D metres over a time interval Tᵢ-T₍ᵢ₋₁₎, where D and Tᵢ can be determined, calculated, signalled or otherwise obtained dependent on parameters (e.g. current mobility state).

Where the location has changed between the fixes, the mobility state is set to be "non-static", operation S722. For the sake of clarity, the scenario illustrated in Figure 7 shows the determination at operation S720 as binary between "static" and "non-static", on the basis of any detected change in location. The skilled reader will readily appreciate that alternative determinations, having more than two cases or indeed two cases decided upon different criteria, may be substituted for the current operation S720 without requiring any other alteration to the flowchart. For example the change in location between fixes may be registered as indicating a "non-static" state when the location has changed by more than a minimum position change threshold of D1 metres since last location fix.

When in non-static mobility state, new location fixes are sent to the controller, operation S724 and a further location fix is taken after an interval of T2 seconds/minutes, operation S726. Typically the time scale T2 is greater than T1, but could be the same or less than T1: sending updates will use power, computation and signalling resources etc. so this task would be performed less frequently when the latest information is that the device is in mobility (and presumably not currently for consideration as a candidate aggregator). The operation flow then returns to operation S720, where it is again determined whether there has been a change in the detected location. In this way the location is still checked in case the mobility state has changed to "static". If the communication device has become static but the latest report still indicates that its state is "non-static", the use of a T2 greater than T1 will merely result in a slight delay in considering it as a potential candidate for activation.

Where the location has not changed between the fixes, it is determined that the mobility state may be "static" but that further fixes are required to be more certain. In the illustrated case, it is considered that a communication device needs to have been static for a longer period than the interval of T1 between successive fixes in operations S710 and S712 (during initialisation) or the interval of T2 in operation S726 (in subsequent iterations).

To avoid a situation of "false" attribution of "static" status to a device (which may after all be embedded in a vehicle) just because the device has stopped temporarily (e.g., car that has stopped at a light, to re-fuel or in heavy traffic, or a car that has temporarily parked), the communication device obtains a further location fix at time N * T3 seconds later, where N and/or T3 could be dependent on the type of communication device (e.g., in a car, residential) or type of scenario of installation (e.g., at a bus terminal, in a scenario that is likely to be static), operation S728. For example, if the scenario is likely to be static, it may be adequate to set N or T3 equal to zero or close to zero as it may be assumed that an earlier indication of "static" status at operation S720 is likely to be correct.

The location fixes N * T3 seconds apart are compared to determine whether there has been a change in the detected location, operation S730. If at the end of the period N*T3 the position is still unchanged, the mobility state is set to "static", operation S732. The current (static) location fix is sent in a reporting message to the controller, operation S734. Optionally, the communication device may also indicate that it is in the "static" state (either in the same reporting message as operation S734 or in a separate status reporting message), operation S736. This option may be considered convenient as it facilitates understanding of why the location fix was reported. Alternatively, the controller may infer that because it has received a reporting message having a location fix from the communication device, it can conclude that the reporting communication device is static.

Where location fixes are derived from GPS-based position signalling, the location fix may be sent as GPS location information (i.e. based upon the WGS84 standard) rather than latitude and longitude alone. Conveniently, the reporting message may include an indication that the location information is in GPS position format. Alternatively or additionally, the reporting message may include an indication that GPS information is available, regardless of the source of the reported location fix.

A reporting message (either the same reporting message as operation S734 or in a separate additional information reporting message) may optionally include additional information, for instance: specifics of the candidate aggregator: e.g. device model, software release information, hardware identifiers, etc; device state, such as battery status; and/or radio information, such as camped Cell Id, Radio coverage quality, CQI of radio channel used to perform such a communication, neighbour cells for the communication device modem, etc.

The flow then iterates, whilst the communication device is in mobility state "static". The communication device obtains a further location fix after an interval of T4 seconds, operation S740. T4 is typically a shorter time period than T2, since it is desirable to avoid a communication device being considered "static" when it is in fact "non-static": any static communication device is a potential candidate aggregator, so any false attribution of "static" status may have a detrimental effect on the delivery of an effective aggregator layer. The operation flow in the "static" mobility state then returns to operation S730, where it is checked once again whether the detected location has changed. Any change in location results in the mobility state being set to non-static and location fixes being taken at intervals of T2 (rather than T4).

In a further arrangement of the present disclosure, more than one aggregation layer is activated within the network. In certain cases, respective aggregation layers are activated and deactivated in corresponding sectors or groups of sectors of the cellular network. In certain cases aggregation layers are established within one sector or cell that extend the coverage of that sector or cell to encompass communication devices served by neighbouring sectors or cells: thus the benefit to the network of the deployment of any given aggregation layer may be calculated for a region of the radio coverage of the cellular network that includes more than one sector and/or cell.

Certain arrangements of the present disclosure relate to the dynamic activation of one or more communication devices to provide an aggregation layer. Each of the one or more communication devices appears, to the macrolayer as a UE; while to other communication devices, they each appear as a class of small cell base transceiver station. The dynamic activation is due in part to determining if a benefit could be expected by such dual UE/small cell activation: that might arise if the macrolayer doesn't provide a prerequisite quality of service to the other communication devices. Dynamic activation also requires a more fine-tuned determination dependent upon selecting a set of devices capable of the dual UE/small cell or UE/MiFi functionality for activation and determining whether the network would benefit from the activation of that particular group. Only where the network is determined to benefit on the basis of this fine-grained determination will the selected communication devices be activated as hybrid UE/small cells (or UE/MiFi devices).

Likewise certain examples described in of the present disclosure relate to the dynamic deactivation of an aggregation layer provided by certain communication devices.

Considering once more the simplified example of a binary determination of whether a communication device is in "static" or "non-static" state, it is clear that once an aggregator device has activated an aggregator mode (and radiates a small cell, VLC or WiFi coverage, for example) it is desirable to monitor the location of the device in case there is a change in that mobility state and method to deal with change of mobility state: "non-static" state being presumed incompatible with effective aggregator functionality.

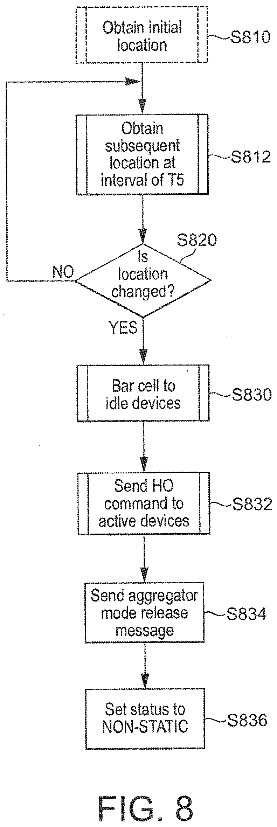

This scenario is illustrated in Figure 8.

Once the communication device has been activated, the communication device monitors its location every T5 seconds (obtaining an initial location fix at operation S810, if necessary and further location fixes at operation S812). T5 needs to be a very short time as it is crucial to determine as soon as possible whether the communication device is still "static" since the performances of the network may be affected. Note that this may be the same iterative monitoring of mobility status as at operation S740 of Figure 7 or a distinct iteration at a different time interval specific to monitoring the operation of active aggregator devices.

The location fixes obtained at operations S810 and S812 are compared, operation S820, and if location changes (to a predetermined degree of accuracy, etc.), the communication device will immediately bar the cell (so that the UEs in idles will not connect), operation S830 and send handover commands to all the communication devices connected to the aggregator cell and to the macrocell, operation S832. The handover procedure from aggregator cell to macrocell may then be handled according to any conventional standardised handover procedures.

The communication device sends the handover command because it effectively operates as a base station for the aggregator cell when it is activated.

The cell barring is important in order to prevent nearby communication devices in idle mode from attempting to connect to the cell radiated by the communication device, while that cell is still being radiated, to support the handover operation, for instance.

Conveniently the deactivating aggregator device sends the controller a message including an indication that aggregator-state has been released giving the cause as "mobility", operation S834. Additionally, the deactivating aggregator device may then update its mobility state to "non-static", operation S836.

The communication device may additionally monitor its battery life every T6 seconds. As noted previously, low battery level may preclude the communication device from being considered a candidate for activation. If expected remaining battery duration is lower than T7 seconds/minutes, the active communication device may conveniently gradually deactivate the aggregator mode by performing operations similar to operations S832 and S834. In this case however, handover commands will be executed, and confirmed completed, one at a time, before sending out further handover commands.

As will be apparent from the preceding discussion, it is assumed that the interactions between controller and communication device are governed by a shared communication protocol.

Using this protocol, the controller can send information requests to one or more communication devices (aggregators), specifying any additional information it wants to receive.

The communication device likewise uses the shared protocol to respond to such information requests, providing the requested information, which may for instance consist of the following:
- Mobility State
- Communication device specifics: e.g. device model, software release, hardware identifiers, etc.
- Device State: battery status
- Radio information: Serving Cell Id, Radio coverage quality (e.g. Serving Cell RSRP, Serving Cell RSRQ, etc.); CQI of radio channel used to perform such a communication, Neighbour cells for the UE modem
- Radio measurements executed on neighbour cells, detected cells on other LTE frequencies that are not part of the neighbour list, Wi-Fi access point identifiers (i.e. SSIDs) and strength detected onto Wi-Fi receiver

Conveniently, the communication device may maintain a protocol connection open by sending dummy bits for the next Z seconds, otherwise it stops sending dummy bits.

Using this protocol, the controller can also send commands instructing the Communication device to enter into aggregator state (i.e. as a either a small cell and/or Wi-Fi Access point). The communication protocol for such a command includes a set-up command (sent to the communication device) providing the following information: LTE carrier to be used for transmission, and main parameters; transmission, TX, power to be used: (default is "MAX TX Power); optionally, a parameter for setting-up a second carrier; optionally, a parameter to set-up a Wi-Fi Access Point; time of the day in which the cell shall start radiating; Parameters needed to manage the status of local algorithms within the Communication device whilst in the aggregator state.

Once the command to enter aggregator mode is received, the communication device uses the shared communication protocol to obtain, from a controller database and/or a database within the Operational Support System (OSS) server, the parameters needed to set-up the aggregator cell: for example, IP addresses (if not derived with a fixed rule from current R-UE IP address). Alternatively or additionally, the communication device may use parameters used last time it acted as an aggregator, provided that some criteria are still met: for example that the location is still the same as last time; that, while the location has changed, the RAU is still the same; that, while the location has changed, the R-U camped in the same cell as last time. The method by which the parameters needed to set up the aggregator are obtained will be described in greater detail below.

Once the communication device has the information needed to set-up the aggregator cell, it prepares its transceiver module (565, Figure 5) to be ready to radiate. The communication device then starts radiating at the requested Time of the Day. The Communication device then confirms to the controller that it is radiating (i.e. that the aggregator mode is active).

Whilst the communication device is in aggregator state, the communication protocol may also be used by the controller to request provision of additional information, such as: Battery status; Number of connected communication devices; Average Resource Blocks occupation; Average CQls of the connected UEs; and Average CQI of the connected Modem.

In a typical telecommunications network architecture that includes a radio access network (RAN), a core network (CN) and a packet data network (PDN), communication devices, such as mobile terminals, user equipment (UEs) and wireless access stations, establish wireless connections to the network by means of the RAN. In the LTE standards, the core network is referred to as the Evolved Packet Core (EPC) and the data transferred over this wireless connection are carried by a virtual connection between the UE and the PDN, known as an "EPS bearer" (where EPS stands for Evolved Packet System).

Within communication devices that offer aggregator facilities as LTE small cells, the network interface unit 560 sets up a connection to the EPC using an EPS bearer as transport layer. Network interface units 560 of these communication devices thus connect to the macrolayer in a conventional manner, appearing to the macrolayer as if they belong to a conventional UE. For convenience, such LTE small cell are added to the same Routing Area (RA) as the macro cell providing coverage to the small cell.

Optionally, such devices may be assigned a different security profile so that the "conventional" connection to the EPC may be adapted to handle an alternative connectivity to a Security Gateway (SecGW) within the EPC. Small Cell might then be allowed to connect to the EPC without establishing their own IPSec (since Small Cell traffic goes through an LTE modem (i.e. a macrolayer interface of the network interface unit 560) that connects to a macro cell, and since that macro cell is in turn connected to the SecGW).

Conveniently, this "conventional" connection also allows voice and SMS services to be delivered using a legacy circuit-switched network such as GSM. So-called Circuit Switched FallBack (CSFB) within LTE may be necessary to support circuit-switched calls in some networks.

To implement the connection 1) between the communication device in aggregator mode and the EPC and 2) between the aggregator device and nearby communication devices, the network interface unit 560 includes two separate network interfaces: a coverage extension interface arranged to provide the services of a normal Small (or Pico) Cell and a "backhaul" interface, which serves to provide "conventional" connectivity to the EPC. The network interfaces are paired when the communication device is in aggregator mode. In the following discussion the "backhaul" interface is referred to as "R-UE" in recognition of its UE-like appearance to the macrolayer.

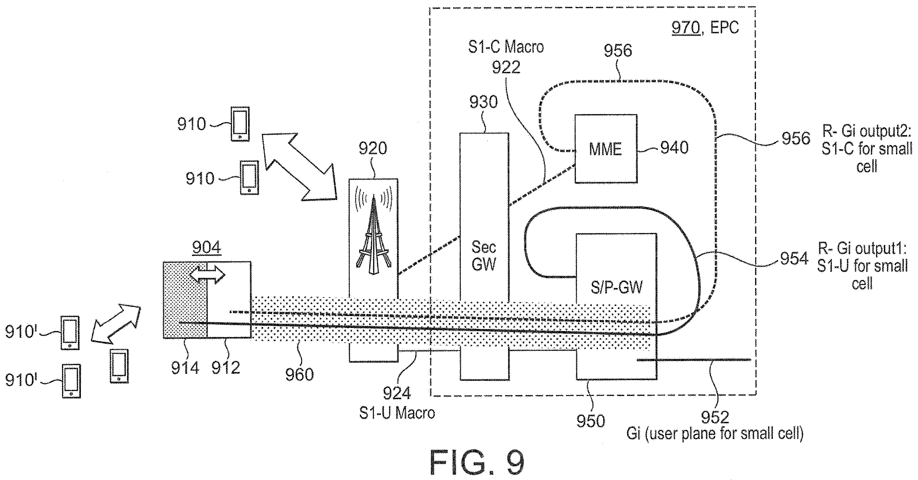

Figure 9 illustrates diagrammatically how an eNodeB in the macrolayer, provides LTE coverage (typically FDD) to a set of UEs 910, amongst them an aggregator device 904 having an interface R-UE 912. Certain UEs 910' are shown camping on the coverage area provided by the aggregator device 904 through its small cell facility 914.

An EPS bearer 960 is established by the R-UE 912 through the macro layer (i.e. eNodeB 920) and into the EPC 970. The EPS bearer 960 transfers data from the aggregator device 904 across a security gateway (SecGW) 930 to a further gateway 950 (which may be a serving gateway S-GW or a PDN gateway P-GW that provides an interface to the PDN). The control node in the EPC is the Mobility Management Entity (MME) 940: this node serves to control the behaviour of the entities in the EPC and terminates certain communications from the small cell after they have been output from the EPS bearer 960.

The "normal" output of the S/P - GW 950 is carried over a Gi interface 952. Where the EPS bearer output (R-Gi) includes S1-U interface data (i.e. user plane data) for the small cell, 954, this is terminated in the S/P - GW 950. Where the EPS bearer output (R-Gi) includes S1-C interface data (i.e. control plane data) for the small cell, 956, this is terminated in the MME 940. In this specification, S1-C is used as a synonymous of what is termed in 3GPP standards as S1 -MME. S1-C interface data (i.e. control plane data) for the macro cell, 922, is also terminated in the MME 940; while S1-U interface data (i.e. user plane data) for the macro cell, 924, is also terminated in the S/P - GW 950.

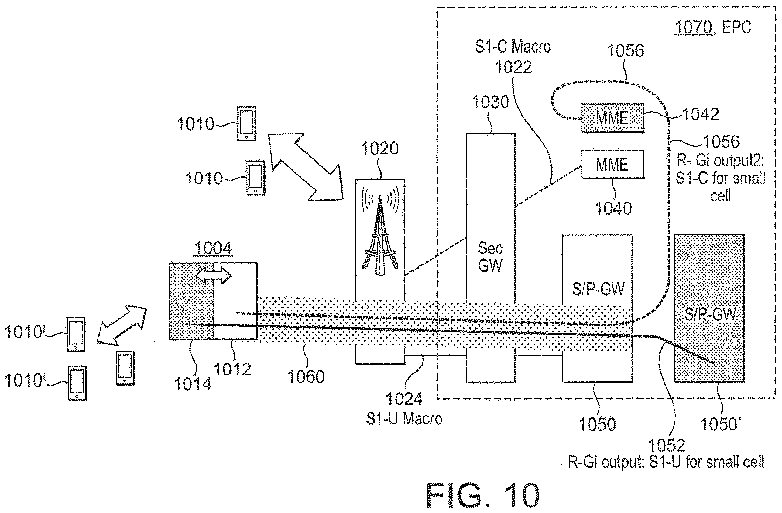

In as variation of the arrangement of Figure 9, the functions for macro and small cell operation are logically split as if they were being handled by different EPCs. Figure 10 illustrates this logical division.

As for Figure 9, Figure 10 illustrates an eNodeB 1020 representing macrolayer LTE coverage provided to a set of UEs 1010, amongst them an aggregator device 1004 having an interface R-UE 1012. Certain UEs 1010' are shown camping on the coverage area provided by the aggregator device 1004 through its small cell facility 1014.

An EPS bearer 1060 is established by the R-UE 1012 through the macro layer (i.e. eNodeB 1020) and into the EPC 1070. The EPS bearer 1060 transfers data from the aggregator device 1004 across a security gateway (SecGW) 1030 to a first logical gateway 1050 (which may be a serving gateway S-GW or a PDN gateway P-GW that provides an interface to the PDN). A first logical control node 1040 serves to control the behaviour of the entities in the EPC 1070 and terminates certain communications from the macrolayer. A second logical control node 1042 terminates certain communications from the small cell after they have been output from the EPS bearer 1060.

The "normal" output of the S/P - GW 1050 is carried over a Gi interface to the PDN. Where the EPS bearer output (R-Gi) includes S1-U interface data (i.e. user plane data) for the small cell, 1054, this is terminated in a second logical gateway, S/P - GW 1050'. Where the EPS bearer output (R-Gi) includes S1-C interface data (i.e. control plane data) for the small cell, 1056, this is terminated in the second logical MME 1042. S1-C interface data (i.e. control plane data) for the macro cell, 1022, is terminated in the first logical MME 1040; while S1-U interface data (i.e. user plane data) for the macro cell, 1024, is terminated in the first logical gateway S/P - GW 1050.

At the activation of the aggregator mode in the communication device, it is necessary to integrate this new "aggregator" into the existing macrolayer network. These are the actions done automatically by the controller once the aggregator is selected and activated. First of all, it is necessary to compose the parameters to be used by the aggregator.

The parameters needed by any aggregator to set up the aggregator mode fall in three categories:
1. aggregator identifiers, unique across the whole network;
2. generic parameters of a new cell (power, admission control, congestion, etc...), which in general are the same for all aggregators; and
3. mobility parameters to compose the neighbouring relationship with the rest of the network.

These parameters will now be considered in detail:

### 1. Aggregator identification parameters:

In certain examples, each aggregator requires three distinct identification parameters to ensure that that aggregator has an identity that is unique in each part of the telecommunications network: Cell-ID; Tracking Area (TA); and Physical-layer Cell Identity (PCI).

The transitory nature of aggregators means that the procedure for obtaining identification parameters is conveniently automated; this contrasts with the conventional procedure when a new fixed small cell or macro-cells is to enter service: such devices are conventionally added manually as required.

### Cell-ID

This parameter needs to be defined not only for radio access network entities (such as UEs and eNodeBs) but also in the Core Network nodes (such as MME and P-GW nodes). In the terminology of the 3GPP LTE Standards, the term "Cell-ID" may refer to an identifier such as the Evolved Cell Global Identifier (ECGI), or the ECI (E-UTRAN Cell Identifier): these terms combine the eNodeB ID (uniquely identifying an eNodeB within a given network) and the LTE Cell ID (which is simply the 8-bit identifier of the cell of a given eNodeB). The 8-bit LTE Cell ID should not be confused with the generic term "Cell-ID" used herein to refer to a cell identifier that is unique to a given cell within the network (at least).

To ensure that a suitable Cell-ID is available when a new aggregator is to be activated in the network, certain examples provide a predefined list of Cell-IDs configured in the Core Nodes. These predefined Cell-IDs are reserved and dynamically allocated to the aggregators by the controller. This is consistent with the conventional configuration of Core Nodes whereby every new node is defined with a new Cell-ID.

The aggregator needs to be configured with one such cell-ID before it activates an instance of an aggregator cell: this facilitates automation.

The pre-existence of an aggregator cell would cause the Core Network no problem because aggregator cells will be seen as cells without traffic until the aggregators are activated. To Core Network nodes, these reserved Cell-IDs are always part of the network. The pool of Cell-IDs is conveniently larger than the number of aggregators to be activated simultaneously.

In certain examples, the controller is provided with the same predefined list of reserved Cell-IDs defined in the Core Network nodes and will manage itself. The Controller will choose one of the cell-IDs and allocate it to the new created aggregator. The chosen Cell-ID must be one which is not being used at this moment as the Cell-ID is unique in the whole network.

### Tracking Area

The location of a UE in a cellular telecommunications network is conveniently tracked by determining the approximate geographical area in which the UE last exchanged paging signals. Different radio access technologies use different terms to refer to these approximate geographical areas. In GSM, the term "location area" (LA) is used: in GPRS and EDGE, "routing area" (RA). UMTS technologies use UTRAN registration areas (URAs) as well as the LAs and RAs of the GSM/GPRS technologies. LTE also uses URAs, LAs and RAs - the term "tracking area" is used to refer to any one of these areas. Calls and paging messages to a UE are initially directed to the last tracking area in which the UE reported. Typically any given cell is associated with a single tracking area.

As the aggregator is to add a new cell, it is necessary for that cell to be associated with an appropriate tracking area, so that it can identify the location of any communication devices camped on the aggregator cell when connecting to the network. This information, together with the serving Cell-ID of the macrolayer network is sent to the controller upon first connection and updated every time the aggregator changes serving cell.

Certain examples use the same tracking area for the aggregator cell as is used by the macrolayer cell with which the aggregator is associated. This avoids the need for signalling for communication devices in the coverage area of the aggregator when these communication devices leave and re-enter range of the aggregator cell.

### Physical-layer Cell Identity (PCI)

The PCI is the cell identifier at physical layer that is included in the synchronization signals (primary synchronisation signals (P-SS) and secondary synchronisation signals (S-SS)): the PCI thus allows any communication devices receiving signals to distinguish between respective transmitters.

By ensuring that cell transmitters within range of one another transmit using different PCIs, it becomes possible to differentiate between cells.

The LTE 3GPP Standards allow the assignment of 504 different unique PCIs (numbered 0 to 503) per frequency that can be used in any network. As there are often many more cells than that needing to operate in a given frequency in a typical LTE network, it becomes necessary, at some point, to reuse some of these numbers. To avoid undesirable network behaviour (such as sustained dropped calls in certain geographical regions), it becomes important that the receivers of any one UE don't receive radio frames from two cells with the same PCI.

In order to use a different PCI for the aggregator, certain examples provide a reserved list of PCIs. So, out of the 504 possible PCI values, N (say, 30) will be reserved for aggregators. These reserved values are not used in the macro network and are managed by the controller internally. Therefore, this list is pre-configured in the controller. The controller will choose a PCI which is not in current use for a new created aggregator.

Certain examples proceed to assign PCI values from the reserved list even when all the PCI values on the reserved list are in use in accordance with a PCI assignment procedure.

In an exemplary PCI assignment procedure, the (in-use) PCI value that is assigned is a PCI value used by an aggregator determined to be at the greatest distance in terms of radio-frequency propagation to that of the new aggregator. This distance is conveniently calculated for each aggregator, as the controller stores the reported locations of each aggregator activated in the network. The location of the aggregator itself is also obtained: in that way, the controller predicts the potential coverage of each aggregator and finds the PCI value least likely to result in contention with the new created aggregator.

In an alternative or additional PCI assignment procedure, the assigned, in-use, PCI value is selected as that associated with the least measured signal interference. Since the controller has a record of the location of every aggregator (thus for example, the controller has a record of, at the minimum, the eNodeB in the macrolayer that serves each aggregator), the controller may be configured to calculate the potential interference between the newly created aggregator and the in-use aggregators using these location records. A PCI value may then be selected with the greatest distance (in terms of predicted lower interference) to another aggregator. To be more accurate, the controller can apply radio propagation techniques to the different in-use aggregators to determine which is one is the least likely to become an interference source with the new created aggregator. In addition, there are already conventional automatic PCI conflict-avoidance features that can be loaded in the aggregator to solve automatically any issue of PCI interference that can happen during the life of the aggregator.

In a further alternative PCI assignment procedure, the controller receives a network parameter measurement value (for example, a measure of received signal strength at a location associated with the newly created aggregator), the value being measured for the communication device (i.e. the existing, active aggregator) to which the given PCI value is currently assigned, determines whether the network parameter exceeds a threshold level, and if the network parameter is below the threshold level, determines that the given PCI is available for assignment.

### 2. Aggregator Generic Parameters Configuration:

In certain examples, the controller will also have to configure all the pre-defined parameters for aggregators, and to download these pre-defined parameters to the newly instantiated aggregator as part of the activation procedure.

In a conventional macrocell, there can be a large number of parameters to configure: these parameters are associated with many different aspects of the operation of a cell such as mobility management, power control, congestion control, admission control, etc.

In broad terms, these generic parameters may be considered as belonging to one of two classes: fixed parameters and "aggregator capability dependent" parameters.

'Fixed parameters' are parameters that are defined in the controller taking the same value for all the aggregators. Fixed parameters do not depend on the specific features of the aggregator.

'Aggregator Capability Dependent' parameters, by contrast, are parameters that depend on the specific capabilities of an aggregator. Examples of relevant, specific capabilities include maximum power supported, maximum number of users supported, processing capacity, different technologies and operational frequency bands, etc.

In certain examples, the controller is configured to maintain records of the potential different values of a given parameter, and then depending on the aggregator capabilities, one or another value will be used and applied without manual intervention.

Conveniently, in certain examples, a dedicated message exchange protocol may be implemented between the controller and the aggregator to obtain information concerning the aggregator capabilities.

The controller is configured to request the capabilities and the latest measurements of the network towards the aggregator and the aggregator responds with the requested information.

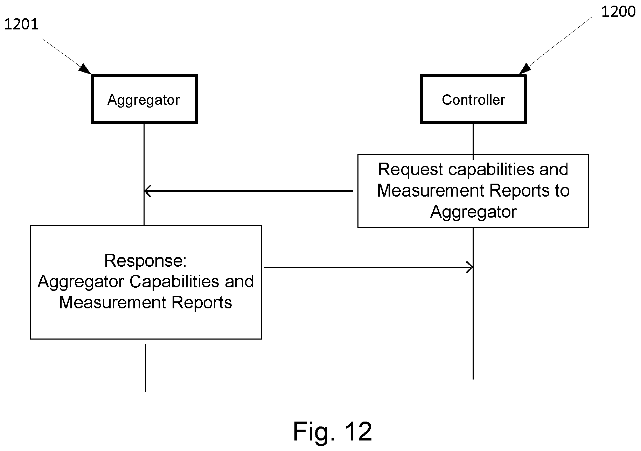

In one example, to setup the maximum power of the different physical channels of the new aggregator cell, it may be necessary to determine the maximum power of the aggregator. An example of such a message exchange is illustrated in Figure 12, discussed below.

In certain examples, the controller is configured to translate these hardware capabilities, obtained from the new aggregator during such a message exchange, to the aggregator capability parameters.

It is noted that conventional cells (small cell or macro cell) are set up in a different manner. The characteristics of the base station equipment are analysed empirically and the equipment specific parameters are then set manually by an engineer.

By contrast, the temporary and potentially nomadic nature of the aggregators means an information exchange procedure is needed to find out the aggregator characteristics to allocate different parameter values without direct human intervention.

### 3. Mobility Neighbours Configuration

In certain examples, the controller is further configured to request, from the aggregator, information about the cell serving and measurements of the radio environment. Examples of the types of information that may be requested include: an identification of the unique neighbouring cell; information concerning neighbour cell configuration; and the macro network configuration.

**Basic unique neighbouring cell.** As previously noted, the aggregator reports, to the controller, the serving cell-id (i.e. the Cell-ID for the eNodeB providing backhaul to the aggregator in the macro network); this occurs both at the moment of activation and at every change of the serving cell. The serving cell-id may conveniently be used to identify the basic neighbouring cell. As a particular example, it may be used to define the CS Fallback (3GPP TS 23.272) blind redirection to 2G or 3G.

**Neighbour Cells configuration:** In certain optional scenarios, the aggregator may be configured to include within the above-mentioned serving cell-id report, any cell encountered when the last set of measurements were performed. Information identifying these encountered cells may conveniently be included by the controller in a list of neighbouring cells.

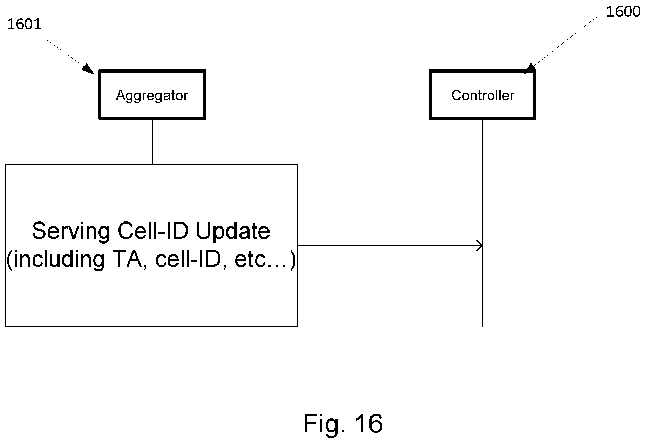

The message flow for neighbour cell configuration (illustrated in Figure 16) is similar to the message exchange for the aggregator capabilities illustrated in Figure 12.

**Macro Network Configuration:** In certain optional scenarios, the controller may be configured to access the macro network configuration. In certain cases, the controller may then include the list of neighbours copied from the macro serving cell for the aggregator neighbouring definition (similarly to the CS Fallback case above).

The macro cell serving the aggregator must add a new neighbour which is the aggregator. This is done automatically by the Controller through the usual OSS system of the macro network. Optionally it can be added also as a neighbour of the closest neighbouring cells of the macro serving cell.

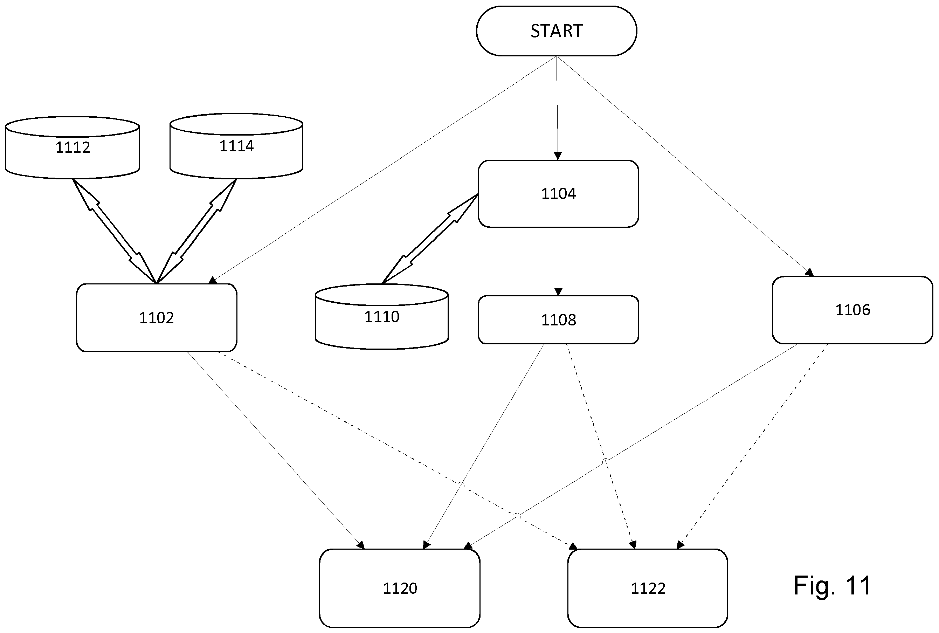

Finally the whole configuration database is sent to the aggregator with the order of activation to start the service in the specific band configured for this purpose. The following Figures (Figures 11 to 16) show the steps performed during the activation of an aggregator.

Figure 11 provides a schematic overview of the flow of operations performed by a controller entity to initialise a given UE as an aggregator once it has been selected for activation in accordance with another aspect of the present disclosure.

When a UE is selected to act as an aggregator and the aggregator service is first activated, it is necessary to integrate the aggregator into the core network and the macrolayer cellular telecommunications system. The CN and macrolayer entities must be able to address the aggregator unambiguously and to distinguish messages from the aggregator from other macrolayer communications.

To this end, the controller entity makes use of available information such as the capabilities of the UE; for example its maximum transmission power or the operating frequency range of the transmitter. This must at least initially be obtained from the UE (while at least some capability information may be available from the operations associated with identifying the UE as a candidate aggregator and selection of the UE for activation).

In block 1102, the controller determines the aggregator identification parameters that will facilitate unique identification of the aggregator within the core network and the macrolayer. This is done with reference to a first database 1112, storing a pool of cell-IDs reserved for use by aggregators, and a second database 1114, storing a pool of physical layer cell identity (PCI) values reserved for use by aggregators. In the case of the second database 1114, it is preferred that the PCI used is not used by another aggregator, however where this is not possible, the PCI used may conveniently be selected as the in-use PCI that is associated with an aggregator determined to be at the greatest distance from the current aggregator or a PCI associated with an aggregator whose reference signal attenuation is less than an interference threshold.

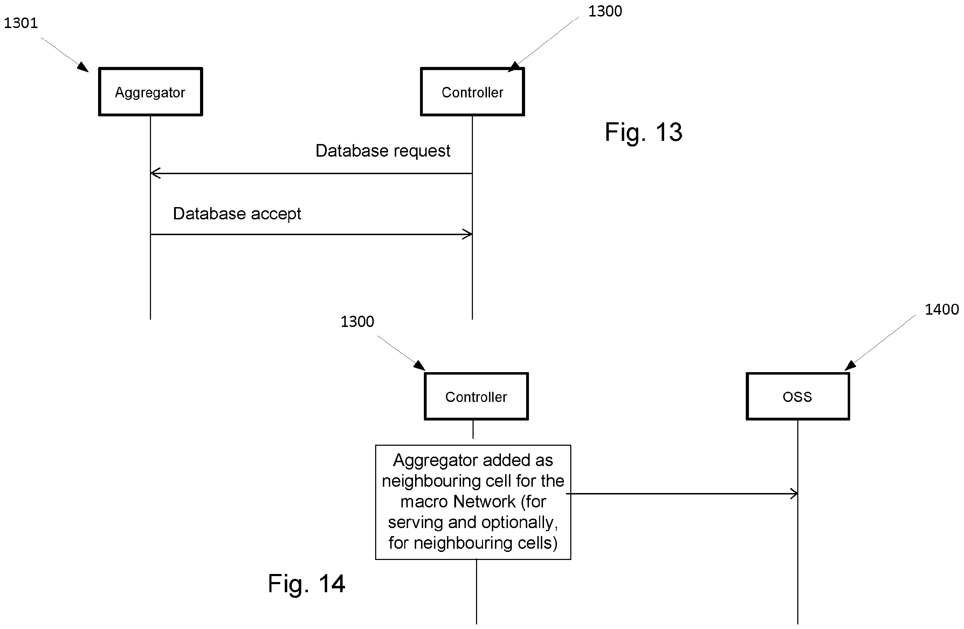

In block 1104, the controller retrieves information associated with neighbouring cells in the macrolayer from a configuration database 1110, which will characterise the neighbourhood relationship exhibited by the aggregator with respect to the network. Figure 13 illustrates the exchange of messages between the UE 1301 and a controller entity 1300 concerning access to the configuration parameter database. Optionally, this database may be populated by information obtained from the UE previously, for instance, as discussed in relation to the determination of whether the UE is a suitable candidate for operation as an aggregator.

In block 1106, the controller requests capabilities and measurement reports from the aggregator. The operations represented by this block are illustrated in more detail in Figure 12, which illustrates the exchange of messages between the UE 1201 and a controller entity 1200 concerning UE capabilities and requesting the current values for respective network parameters (i.e. measurement reports concerning congestion, Quality of Service, etc.).

At block 1108, the neighbour cell information is processed for the aggregator's neighbour cells.

At block 1120, the aggregator identification parameters, the neighbouring cell information and the aggregator capabilities and measurement reports are all used to configure the network to accept the aggregator as a new cell that coexists and cooperates with the macrolayer neighbour cells in the network. Figure 14 illustrates the integration of the UE providing the aggregator functionality as a neighbour cell entity within the macrolayer network in accordance with a further aspect of the present disclosure: the OSS 1400 is informed, by the controller 1300, that the aggregator is to be added as a neighbouring cell in the macrolayer network (at least in the records of all serving neighbouring cells and optionally for all neighbouring cells).

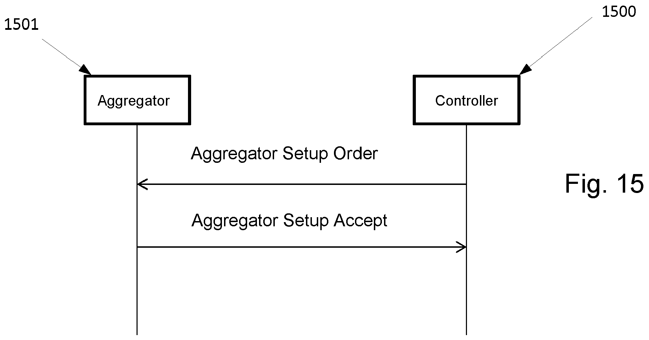

At block 1122, the configuration parameters used by the network are signalled to the aggregator in a cell set-up order. Figure 15 illustrates the basic exchange of messages concerning the setup of the UE 1501 as an aggregator in accordance with an aspect of the present disclosure. The aggregator set-up order is signaled to the UE 1501 by the controller 1500, and the UE 1501 responds that it accepts the order.

Figure 16 illustrates the optional transmission of a dedicated message including information relating to the macrolayer profile of a UE 1601 offering aggregator services from the UE 1601 to a controller entity 1600 in accordance with an aspect of the present disclosure. As noted previously, the operations of determining whether the aggregator is a suitable candidate and then selecting that candidate aggregator for activation as an aggregator may deliver sufficient information relating to the macrolayer profile without the requirement for further messages. Indeed, certain examples may reuse previously stored values provided some network/aggregator stability criteria are still met.

During the operational period of the aggregator, the following algorithms are executed (each algorithm being executed in the aggregator, the controller does not participate):
- Maximum number of communication devices in connected mode: a redirection to the macro-cell (or to another cell of whatever type) may be used when the aggregator reaches a predetermined maximum number of Connected Mode users (the aggregator will likely be of more limited capacity than a typical macrocell). This redirection algorithm is running in the aggregator, so the capacity for connected users is conveniently known and preconfigured from the outset. This capacity is furthermore part of the hardware capabilities already sent in the setup process. Knowing the maximum number of users that can be handled simultaneously, the controller will set a maximum admission control number. For example, a maximum of four users may be supported. Then if there are four connections, any new connection will be redirected to another cell by this algorithm. Alternatively or additionally, the redirection algorithm may be triggered when the aggregator exceeds a maximum throughput. Again, when reaching the maximum throughput, the connections are redirected to another cell. In certain examples, the macrocell will already be known to the aggregator as this macrocell is the one providing backhaul connectivity for the aggregator.
- Automatic Neighbour Relationship self-organising network (SON) feature of the 3GPP standard is essential because the aggregator may be moved (or nomadic) within the network, resulting in a continuously changing neighbouring relationship. The automatic neighbour relationship SON feature allows easy handover from aggregator cell to macrocell or another aggregator cell. As soon as one cell is the strongest, the handover can be done even if it is not a defined as a neighbour. The SON feature will be used in the macro network and also in the aggregators to update the neighbouring list according to the radio environment at each moment.
- Voice over LTE (VoLTE) services algorithm: this algorithm can be governed by different criteria to other calls. Using QCI specific information, the optional VoLTE algorithm preferably perfoms measurements and determines that a connected device should be redirected to the macro-cell, if possible (rather than use aggregators), in order to ensure good quality of service for the voice call.
- High mobility algorithm: If some users are found in high mobility state, this optional algorithm may ensure they are handed over to the macrolayer. To implement this, a change on Idle-mode re-selection algorithms will have to be provided so that those user devices do not try to connect via the aggregator layer for a period of x minutes after being handed over.

When it is decided to deactivate an aggregator functionality (following a procedure, such as that in Figure 8, operations S830-S834), then the procedure for the mobility algorithms is the following:
- A timer is used to remove the cell. The timer is a parameter which is configured in the aggregator (one of the 'fixed' parameters sent by the controller in preparation for activation). Once the order to switch-off is received from the controller, the timer is initiated. From initiation of the timer, cell barring and incoming handover reject will be performed to avoid new calls setup in the aggregator.
- Then, removal of the aggregator from the neighbour cells of the network (including other aggregators) occurs. This is done by the controller with commands sent to the OSS of the macro network.
- The penultimate step is to redirect / handover the current calls (as in operation S832). To do this, the aggregator will request to the UEs to perform measurements of neighbouring cells, and then the aggregator will decide to perform redirection or handover as per the standard procedures for choosing the optimal cell as in known mobility algorithms. This is conveniently performed for each connected UE in turn to avoid a disruptive migration of over-many devices to the redirection target cell.
- Finally, the aggregator functionality is deactivated in each aggregator.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst examples described in the foregoing description refer to LTE, it should be noted that the aggregator architecture described may equally be deployed in telecommunications networks based on other cellular telecommunication architectures, for example 2G, 3G, LTE-Advanced (3GPP Release 10 onwards), future architectures (e.g., 5G), as well as WD-CDMA and WiMAX. The aggregator architecture is agnostic to the specific type of RAN used. In other words, the aggregator controller/controller entity is adapted to work with any RAN and/or combinations of RANs. This is, for example, one of the reasons why in certain examples the aggregator controller/controller entity is independent of the RAN. Similar observations apply for the communication device for providing an aggregator facility.

In addition, it will be apparent to the reader that the term radio access technology (RAT) may extend to include related technologies such as conventional WiFi technologies (i.e. compliant with the IEEE 802.11 family of standards) and/or VLC technologies, where the context requires or allows this.

Furthermore, while the above description describes the aggregation layer as providing a bridge to the cellular network for communication devices that are at the edges of cells, the skilled reader will appreciate that dynamic coverage "blackspots" may arise elsewhere within radio coverage regions (for example, due to equipment malfunction, unusual usage patterns, and/or features of the natural or built environment).

The reader will furthermore appreciate that aspects of the foregoing disclosure apply equally and without loss of generality to aggregators (and candidate aggregators) that are fixed in a single location as to aggregators (and candidate aggregators) that are in an alternative mobility state: such as nomadic or mobile.

It will also be well understood by persons of ordinary skill in the art that whilst the described embodiments implement certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

## Claims

1. A controller entity (300) for facilitating initialization of an aggregator functionality in a first communication device (104, 204) in a cellular communication network (100, 200), the controller entity being configured to:
obtain measurement information from the first communication device;
determine values for a plurality of aggregator parameters in accordance with said measurement information, said values being required to initialize the aggregator functionality at the first communication device, wherein the aggregator functionality comprises providing radio coverage to a plurality of second communication devices within a coverage area of the first communication device, and wherein determining the values for the plurality of aggregator parameters comprises determining a set of aggregator identification parameters by selecting a Physical layer Cell Identity, PCI, from a plurality of PCIs for assignment to the first communication device, wherein selecting a PCI comprises selecting a PCI least likely to result in contention, each base station entity in the cellular communication network having a respective PCI; and
transmit the determined parameter values to the first communication device.

2. A controller entity as claimed in claim 1, further configured to determine whether the first communication device is selected to activate the aggregator functionality, and to perform the obtaining, determining and transmitting operations when the first communication device is selected.

3. A controller entity as claimed in claim 1 or claim 2, further configured to obtain measurement information by obtaining capability values for the first communication device.

4. A controller entity as claimed in any one of claims 1, 2 or 3, further configured to transmit a command to the first communication device to activate the aggregator functionality.

5. A controller entity as claimed in claim 1, wherein the selected PCI is not assigned to any other network entity.

6. A controller entity as claimed in claim 1, wherein the selected PCI is a PCI currently assigned to another network entity, the PCI being selected in accordance with a signal strength metric, the PCI for the other network entity being selected provided the signal strength metric is less than a threshold level.

7. A controller entity as claimed in any one of claims 1 to 6, further configured to determine the set of aggregator identification parameters by:
obtaining macrocell information from the first communication device; and
extracting macrocell identification parameters for the first communication device.

8. A method for facilitating initialization of an aggregator functionality in a first communication device in a cellular communication network, the method comprising:
obtaining measurement information from the first communication device;
determining values for a plurality of aggregator parameters in accordance with said measurement information, said values being required to initialize the aggregator functionality at the first communication device, wherein the aggregator functionality comprises providing radio coverage to a plurality of second communication devices within a coverage area of the first communication device, and wherein determining the values for the plurality of aggregator parameters comprises determining a set of aggregator identification parameters by selecting a Physical layer Cell Identity, PCI from a plurality of PCIs for assignment to the first communication device, wherein selecting a PCI comprises selecting a PCI least likely to result in contention, each base station entity in the cellular communication network having a respective PCI; and
transmitting the parameter values to the first communication device.

9. A communication device (104, 204) for providing an aggregator functionality in a cellular communication network (100, 200); the communication device being configured to initialize the aggregator functionality by:
performing at least one measurement operation to generate a measurement output;
transmitting measurement information corresponding to the measurement output to a controller entity;
storing values for aggregator parameters obtained from the controller entity, the aggregator parameters being determined in accordance with the measurement information, the stored values forming a parameter database of values required to initialize the aggregator functionality, the parameters including an assigned Physical layer Cell Identity, PCI, of a plurality of PCIs, the assigned PCI being the PCI least likely to result in contention, each base station entity in the cellular communication network having a respective PCI; and
executing the aggregator functionality using the values from the parameter database, wherein the aggregator functionality comprises providing radio coverage to a plurality of second communication devices within a coverage area of the communication device.

10. A method for initialising an aggregator functionality in a first communication device, the method comprising:
performing at least one measurement operation to generate a measurement output;
transmitting measurement information corresponding to the measurement output to a controller entity;
storing values for aggregator parameters obtained from the controller entity, the aggregator parameters being determined in accordance with the measurement information, the stored values forming a parameter database of values required to initialise the aggregator functionality, the parameters including an assigned Physical layer Cell Identity, PCI of a plurality of PCIs, wherein selecting a PCI comprises selecting a PCI least likely to result in contention , each base station entity in the cellular communication network having a respective PCI; and
executing the aggregator functionality using the values from the parameter database, wherein the aggregator functionality comprises providing radio coverage to a plurality of second communication devices within a coverage area of the first communication device.

11. A system for instantiating an aggregator functionality in a cellular communication network (100, 200), the system including at least a first communication device (104, 204) and a controller entity (300), wherein the controller entity (300) is configured to:
obtain measurement information from the first communication device;
determine values for a plurality of aggregator parameters in accordance with said measurement information, said values being required to initialize the aggregator functionality at the first communication device, wherein determining the values for the plurality of aggregator parameters comprises determining a set of aggregator identification parameters, by selecting a Physical layer Cell Identity, PCI from a plurality of PCIs for assignment to the first communication device, wherein selecting a PCI comprises selecting a PCI least likely to result in contention , each base station entity in the cellular communication network having a respective PCI; and
transmit the parameter values to the first communication device; and wherein the first communication device is configured to:
store the determined values for the aggregator parameters as a parameter database of values required to initialize the aggregator functionality; and
execute the aggregator functionality using the values from the parameter database, wherein the aggregator functionality comprises providing radio coverage to a plurality of second communication devices within a coverage area of the first communication device.

12. A method for instantiating an aggregator functionality in a cellular communication network, the cellular communication network including at least a first communication device, the method comprising:
obtaining measurement information from the first communication device;
determining values for a plurality of aggregator parameters in accordance with said measurement information, wherein determining the values for the plurality of aggregator parameters comprises determining a set of aggregator identification parameters by selecting a Physical layer Cell Identity, PCI from a plurality of PCIs for assignment to the first communication device, wherein selecting a PCI comprises selecting a PCI least likely to result in contention , each base station entity in the cellular communication network having a respective PCI;
transmitting the parameter values to the first communication device;
at the first communication device, storing the determined values for the aggregator parameters as a parameter database of values required to initialise the aggregator functionality; and
executing the aggregator functionality using the values from the parameter database, wherein the aggregator functionality comprises providing radio coverage to a plurality of second communication devices within a coverage area of the first communication device.

## Patentansprüche

1. Steuerungseinheit (300) zum Vereinfachen der Initialisierung einer Aggregatorfunktionalität in einer ersten Kommunikationsvorrichtung (104, 204) in einem zellularen Kommunikationsnetz (100, 200), wobei die Steuerungseinheit konfiguriert ist zum:
Abrufen von Messinformationen von der ersten Kommunikationsvorrichtung;
Bestimmen von Werten für eine Vielzahl von Aggregatorparametern entsprechend dieser Messinformationen, wobei diese Werte erforderlich sind, um die Aggregatorfunktionalität an der ersten Kommunikationsvorrichtung zu initialisieren, wobei die Aggregatorfunktionalität das Bereitstellen von Funkabdeckung an eine Vielzahl von zweiten Kommunikationsvorrichtungen innerhalb eines Versorgungsgebiets der ersten Kommunikationsvorrichtung umfasst, und wobei das Bestimmen der Werte für die Vielzahl von Aggregatorparametern das Bestimmen eines Satzes von Aggregatoridentifizierungsparametern umfasst, indem eine Physikalische-Schicht-Zellidentität (Physical layer Cell Identity, PCI) aus einer Vielzahl von PCIs zur Zuweisung an die erste Kommunikationsvorrichtung ausgewählt wird, wobei das Auswählen einer PCI das Auswählen einer PCI umfasst, die am wenigsten wahrscheinlich zu Konflikten führt, wobei jede Basisstationseinheit im zellularen Kommunikationsnetz eine jeweilige PCI aufweist; und
Übertragen der bestimmten Parameterwerte an die erste Kommunikationsvorrichtung.

2. Steuerungseinheit nach Anspruch 1, ferner konfiguriert zum Bestimmen, ob die erste Kommunikationsvorrichtung zum Aktivieren der Aggregatorfunktionalität ausgewählt wurde, und zum Durchführen der Abruf-, Bestimmungs- und Übertragungsvorgänge, wenn die erste Kommunikationsvorrichtung ausgewählt wurde.

3. Steuerungseinheit nach Anspruch 1 oder Anspruch 2, ferner konfiguriert zum Abrufen von Messinformationen, indem Fähigkeitswerte für die erste Kommunikationsvorrichtung abgerufen werden.

4. Steuerungseinheit nach einem der Ansprüche 1, 2 oder 3, ferner konfiguriert zum Übertragen eines Befehls für das Aktivieren der Aggregatorfunktionalität an die erste Kommunikationsvorrichtung.

5. Steuerungseinheit nach Anspruch 1, wobei die ausgewählte PCI keiner anderen Netzeinheit zugewiesen ist.

6. Steuerungseinheit nach Anspruch 1, wobei es sich bei der ausgewählten PCI um eine PCI handelt, die derzeit einer anderen Netzeinheit zugewiesen ist, wobei die PCI entsprechend einer Signalstärkenmetrik ausgewählt wird, wobei die PCI für die andere Netzeinheit ausgewählt wird, wenn die Signalstärkenmetrik unterhalb eines Schwellenwerts liegt.

7. Steuerungseinheit nach einem der Ansprüche 1 bis 6, ferner konfiguriert zum Bestimmen des Satzes von Aggregatoridentifizierungsparametern durch:
Abrufen von Makrozelleninformationen von der ersten Kommunikationsvorrichtung; und
Extrahieren von Makrozellenidentifikationsparametern für die erste Kommunikationsvorrichtung.

8. Verfahren zum Vereinfachen der Initialisierung einer Aggregatorfunktionalität in einer ersten Kommunikationsvorrichtung in einem zellularen Kommunikationsnetz, wobei das Verfahren umfasst:
Abrufen von Messinformationen von der ersten Kommunikationsvorrichtung;
Bestimmen von Werten für eine Vielzahl von Aggregatorparametern entsprechend dieser Messinformationen, wobei diese Werte erforderlich sind, um die Aggregatorfunktionalität an der ersten Kommunikationsvorrichtung zu initialisieren, wobei die Aggregatorfunktionalität das Bereitstellen von Funkabdeckung an eine Vielzahl von zweiten Kommunikationsvorrichtungen innerhalb eines Versorgungsgebiets der ersten Kommunikationsvorrichtung umfasst, und wobei das Bestimmen der Werte für die Vielzahl von Aggregatorparametern das Bestimmen eines Satzes von Aggregatoridentifizierungsparametern umfasst, indem eine Physikalische-Schicht-Zellidentität (Physical layer Cell Identity, PCI) aus einer Vielzahl von PCIs zur Zuweisung an die erste Kommunikationsvorrichtung ausgewählt wird, wobei das Auswählen einer PCI das Auswählen einer PCI umfasst, die am wenigsten wahrscheinlich zu Konflikten führt, wobei jede Basisstationseinheit im zellularen Kommunikationsnetz eine jeweilige PCI aufweist; und
Übertragen der Parameterwerte an die erste Kommunikationsvorrichtung.

9. Kommunikationsvorrichtung (104, 204) zum Bereitstellen einer Aggregatorfunktionalität in einem zellularen Kommunikationsnetz (100, 200), wobei die Kommunikationsvorrichtung konfiguriert ist zum Initialisieren der Aggregatorfunktionalität durch:
Durchführen zumindest eines Messvorgangs zum Erzeugen eines Messergebnisses;
Übertragen von Messinformationen, die dem Messergebnis entsprechen, an eine Steuerungseinheit;
Speichern von Werten für Aggregatorparameter, die von der Steuerungseinheit abgerufen wurden, wobei die Aggregatorparameter entsprechend den Messinformationen bestimmt werden, wobei die gespeicherten Werte eine Parameterdatenbank von Werten bilden, die für das Initialisieren der Aggregatorfunktionalität erforderlich sind, wobei die Parameter eine zugewiesene Physikalische-Schicht-Zellidentität (Physical layer Cell Identity, PCI) aus einer Vielzahl von PCIs beinhalten, wobei es sich bei der zugewiesenen PCI um eine PCI handelt, die am wenigsten wahrscheinlich zu Konflikten führt, wobei jede Basisstationseinheit im zellularen Kommunikationsnetz eine jeweilige PCI aufweist; und
Ausführen der Aggregatorfunktionalität mittels der Werte aus der Parameterdatenbank, wobei die Aggregatorfunktionalität das Bereitstellen von Funkabdeckung an eine Vielzahl von zweiten Kommunikationsvorrichtungen innerhalb eines Versorgungsgebiets der Kommunikationsvorrichtung umfasst.

10. Verfahren zum Initialisieren einer Aggregatorfunktionalität in einer ersten Kommunikationsvorrichtung, wobei das Verfahren umfasst:
Durchführen zumindest eines Messvorgangs zum Erzeugen eines Messergebnisses;
Übertragen von Messinformationen, die dem Messergebnis entsprechen, an eine Steuerungseinheit;
Speichern von Werten für Aggregatorparameter, die von der Steuerungseinheit abgerufen wurden, wobei die Aggregatorparameter entsprechend den Messinformationen bestimmt werden, wobei die gespeicherten Werte eine Parameterdatenbank von Werten bilden, die für das Initialisieren der Aggregatorfunktionalität erforderlich sind, wobei die Parameter eine zugewiesene Physikalische-Schicht-Zellidentität (Physical layer Cell Identity, PCI) aus einer Vielzahl von PCIs beinhalten, wobei das Auswählen einer PCI das Auswählen einer PCI umfasst, die am wenigsten wahrscheinlich zu Konflikten führt, wobei jede Basisstationseinheit im zellularen Kommunikationsnetz eine jeweilige PCI aufweist; und
Ausführen der Aggregatorfunktionalität mittels der Werte aus der Parameterdatenbank, wobei die Aggregatorfunktionalität das Bereitstellen von Funkabdeckung an eine Vielzahl von zweiten Kommunikationsvorrichtungen innerhalb eines Versorgungsgebiets der ersten Kommunikationsvorrichtung umfasst.

11. System zum Instanziieren einer Aggregatorfunktionalität in einem zellularen Kommunikationsnetz (100, 200), wobei das System zumindest eine erste Kommunikationsvorrichtung (104, 204) und eine Steuerungseinheit (300) beinhaltet, wobei die Steuerungseinheit (300) konfiguriert ist zum:
Abrufen von Messinformationen von der ersten Kommunikationsvorrichtung;
Bestimmen von Werten für eine Vielzahl von Aggregatorparametern entsprechend dieser Messinformationen, wobei diese Werte erforderlich sind, um die Aggregatorfunktionalität an der ersten Kommunikationsvorrichtung zu initialisieren, wobei das Bestimmen der Werte für die Vielzahl von Aggregatorparametern das Bestimmen eines Satzes von Aggregatoridentifizierungsparametern umfasst, indem eine Physikalische-Schicht-Zellidentität (Physical layer Cell Identity, PCI) aus einer Vielzahl von PCIs zur Zuweisung an die erste Kommunikationsvorrichtung ausgewählt wird, wobei das Auswählen einer PCI das Auswählen einer PCI umfasst, die am wenigsten wahrscheinlich zu Konflikten führt, wobei jede Basisstationseinheit im zellularen Kommunikationsnetz eine jeweilige PCI aufweist; und
Übertragen der Parameterwerte an die erste Kommunikationsvorrichtung; und wobei die erste Kommunikationsvorrichtung konfiguriert ist zum:
Speichern der bestimmten Werte für die Aggregatorparameter als eine Parameterdatenbank von Werten, die für das Initialisieren der Aggregatorfunktionalität erforderlich sind; und
Ausführen der Aggregatorfunktionalität mittels der Werte aus der Parameterdatenbank, wobei die Aggregatorfunktionalität das Bereitstellen von Funkabdeckung an eine Vielzahl von zweiten Kommunikationsvorrichtungen innerhalb eines Versorgungsgebiets der ersten Kommunikationsvorrichtung umfasst.

12. Verfahren zum Instanziieren einer Aggregatorfunktionalität in einem zellularen Kommunikationsnetz, wobei das zellulare Kommunikationsnetz zumindest eine erste Kommunikationsvorrichtung beinhaltet, wobei das Verfahren umfasst:
Abrufen von Messinformationen von der ersten Kommunikationsvorrichtung;
Bestimmen von Werten für eine Vielzahl von Aggregatorparametern entsprechend dieser Messinformationen, wobei das Bestimmen der Werte für die Vielzahl von Aggregatorparametern das Bestimmen eines Satzes von Aggregatoridentifizierungsparametern umfasst, indem eine Physikalische-Schicht-Zellidentität (Physical layer Cell Identity, PCI) aus einer Vielzahl von PCIs zur Zuweisung an die erste Kommunikationsvorrichtung ausgewählt wird, wobei das Auswählen einer PCI das Auswählen einer PCI umfasst, die am wenigsten wahrscheinlich zu Konflikten führt, wobei jede Basisstationseinheit im zellularen Kommunikationsnetz eine jeweilige PCI aufweist;
Übertragen der Parameterwerte an die erste Kommunikationsvorrichtung;
an der ersten Kommunikationsvorrichtung, Speichern der bestimmten Werte für die Aggregatorparameter als eine Parameterdatenbank von Werten, die für das Initialisieren der Aggregatorfunktionalität erforderlich sind; und
Ausführen der Aggregatorfunktionalität mittels der Werte aus der Parameterdatenbank, wobei die Aggregatorfunktionalität das Bereitstellen von Funkabdeckung an eine Vielzahl von zweiten Kommunikationsvorrichtungen innerhalb eines Versorgungsgebiets der ersten Kommunikationsvorrichtung umfasst.

## Revendications

1. Une entité dispositif de commande (300) destinée à faciliter l'initialisation d'une fonctionnalité d'agrégateur dans un premier dispositif de communication (104, 204) dans un réseau de communication cellulaire (100, 200), l'entité dispositif de commande étant configurée de façon à :
obtenir des informations de mesure à partir du premier dispositif de communication,
déterminer des valeurs pour une pluralité de paramètres d'agrégateur conformément auxdites informations de mesure, lesdites valeurs étant requises pour initialiser la fonctionnalité d'agrégateur au niveau du premier dispositif de communication, où la fonctionnalité d'agrégateur comprend la fourniture d'une couverture radio à une pluralité de deuxièmes dispositifs de communication à l'intérieur d'une zone de couverture du premier dispositif de communication, et où la détermination des valeurs pour la pluralité de paramètres d'agrégateur comprend la détermination d'un ensemble de paramètres d'identification d'agrégateur par la sélection d'une identité de cellule de couche physique, PCI, parmi une pluralité de PCI pour une affectation au premier dispositif de communication, où la sélection d'une PCI comprend la sélection d'une PCI la moins susceptible de résulter en un conflit d'accès, chaque entité station de base dans le réseau de communication cellulaire possédant une PCI respective, et
transmettre les valeurs de paramètre déterminées au premier dispositif de communication.

2. Une entité dispositif de commande selon la Revendication 1, configurée en outre de façon à déterminer si le premier dispositif de communication est sélectionné de façon à activer la fonctionnalité d'agrégateur et à exécuter l'obtention, la détermination et la transmission d'opérations lorsque le premier dispositif de communication est sélectionné.

3. Une entité dispositif de commande selon la Revendication 1 ou 2, configurée en outre de façon à obtenir des informations de mesure par l'obtention de valeurs de capacité pour le premier dispositif de communication.

4. Une entité dispositif de commande selon l'une quelconque des Revendications 1, 2 ou 3, configurée en outre de façon à transmettre une commande au premier dispositif de communication de façon à activer la fonctionnalité d'agrégateur.

5. Une entité dispositif de commande selon la Revendication 1, où la PCI sélectionnée n'est affectée à aucune autre entité de réseau.

6. Une entité dispositif de commande selon la Revendication 1, où la PCI sélectionnée est une PCI actuellement affectée à une autre entité de réseau, la PCI étant sélectionnée conformément à une mesure d'intensité de signal, la PCI pour l'autre entité de réseau étant sélectionnée à condition que la mesure d'intensité de signal soit inférieure à un niveau seuil.

7. Une entité dispositif de commande selon l'une quelconque des Revendications 1 à 6, configurée en outre de façon à déterminer l'ensemble de paramètres d'identification d'agrégateur par :
l'obtention d'informations de macrocellule à partir du premier dispositif de communication, et
l'extraction de paramètres d'identification de macrocellule pour le premier dispositif de communication.

8. Un procédé de facilitation de l'initialisation d'une fonctionnalité d'agrégateur dans un premier dispositif de communication dans un réseau de communication cellulaire, le procédé comprenant :
l'obtention d'informations de mesure à partir du premier dispositif de communication,
la détermination de valeurs pour une pluralité de paramètres d'agrégateur conformément auxdites informations de mesure, lesdites valeurs étant requises pour initialiser la fonctionnalité d'agrégateur au niveau du premier dispositif de communication, où la fonctionnalité d'agrégateur comprend la fourniture d'une couverture radio à une pluralité de deuxièmes dispositifs de communication à l'intérieur d'une zone de couverture du premier dispositif de communication, et où la détermination des valeurs pour la pluralité de paramètres d'agrégateur comprend la détermination d'un ensemble de paramètres d'identification d'agrégateur par la sélection d'une identité de cellule de couche physique, PCI, parmi une pluralité de PCI pour une affectation au premier dispositif de communication, où la sélection d'une PCI comprend la sélection d'une PCI la moins susceptible de résulter en un conflit d'accès, chaque entité station de base dans le réseau de communication cellulaire possédant une PCI respective, et
la transmission des valeurs de paramètre au premier dispositif de communication.

9. Un dispositif de communication (104, 204) destiné à la fourniture d'une fonctionnalité d'agrégateur dans un réseau de communication cellulaire (100, 200), le dispositif de communication étant configuré de façon à initialiser la fonctionnalité d'agrégateur par :
l'exécution d'au moins une opération de mesure de façon à générer une production en sortie de mesure,
la transmission d'informations de mesure correspondant à la production en sortie de mesure à une entité dispositif de commande,
la conservation en mémoire de valeurs pour des paramètres d'agrégateur obtenus à partir de l'entité dispositif de commande, les paramètres d'agrégateur étant déterminés conformément aux informations de mesure, les valeurs conservées en mémoire formant une base de données de paramètres de valeurs requises pour initialiser la fonctionnalité d'agrégateur, les paramètres comprenant une identité de cellule de couche physique, PCI, affectée d'une pluralité de PCI, la PCI affectée étant la PCI la moins susceptible de résulter en un conflit d'accès, chaque entité station de base dans le réseau de communication cellulaire possédant une PCI respective, et
l'exécution de la fonctionnalité d'agrégateur au moyen des valeurs provenant de la base de données de paramètres, où la fonctionnalité d'agrégateur comprend la fourniture d'une couverture radio à une pluralité de deuxièmes dispositifs de communication à l'intérieur d'une zone de couverture du dispositif de communication.

10. Un procédé d'initialisation d'une fonctionnalité d'agrégateur dans un premier dispositif de communication, le procédé comprenant :
l'exécution d'au moins une opération de mesure de façon à générer une production en sortie de mesure,
la transmission d'informations de mesure correspondant à la production en sortie de mesure à une entité dispositif de commande,
la conservation en mémoire de valeurs pour des paramètres d'agrégateur obtenus à partir de l'entité dispositif de commande, les paramètres d'agrégateur étant déterminés conformément aux informations de mesure, les valeurs conservées en mémoire formant une base de données de paramètres de valeurs requises pour initialiser la fonctionnalité d'agrégateur, les paramètres comprenant une identité de cellule de couche physique, PCI, affectée d'une pluralité de PCI, où la sélection d'une PCI comprend la sélection d'une PCI la moins susceptible de résulter en un conflit d'accès, chaque entité station de base dans le réseau de communication cellulaire possédant une PCI respective, et
l'exécution de la fonctionnalité d'agrégateur au moyen des valeurs provenant de la base de données de paramètres, où la fonctionnalité d'agrégateur comprend la fourniture d'une couverture radio à une pluralité de deuxièmes dispositifs de communication à l'intérieur d'une zone de couverture du premier dispositif de communication.

11. Un système d'instanciation d'une fonctionnalité d'agrégateur dans un réseau de communication cellulaire (100, 200), le système comprenant au moins un premier dispositif de communication (104, 204) et une entité dispositif de commande (300), où l'entité dispositif de commande (300) est configurée de façon à :
obtenir des informations de mesure à partir du premier dispositif de communication,
déterminer des valeurs pour une pluralité de paramètres d'agrégateur conformément auxdites informations de mesure, lesdites valeurs étant requises pour initialiser la fonctionnalité d'agrégateur au niveau du premier dispositif de communication, où la détermination des valeurs pour la pluralité de paramètres d'agrégateur comprend la détermination d'un ensemble de paramètres d'identification d'agrégateur, par la sélection d'une identité de cellule de couche physique, PCI, parmi une pluralité de PCI pour une affectation au premier dispositif de communication, où la sélection d'une PCI comprend la sélection d'une PCI la moins susceptible de résulter en un conflit d'accès, chaque entité station de base dans le réseau de communication cellulaire possédant une PCI respective, et
transmettre les valeurs de paramètre au premier dispositif de communication, et où le premier dispositif de communication est configuré de façon à :
conserver en mémoire les valeurs déterminées pour les paramètres d'agrégateur sous la forme d'une base de données de paramètres de valeurs requises pour initialiser la fonctionnalité d'agrégateur, et
exécuter la fonctionnalité d'agrégateur au moyen des valeurs provenant de la base de données de paramètres, où la fonctionnalité d'agrégateur comprend la fourniture d'une couverture radio à une pluralité de deuxièmes dispositifs de communication à l'intérieur d'une zone de couverture du premier dispositif de communication.

12. Un procédé d'instanciation d'une fonctionnalité d'agrégateur dans un réseau de communication cellulaire, le réseau de communication cellulaire comprenant au moins un premier dispositif de communication, le procédé comprenant :
l'obtention d'informations de mesure à partir du premier dispositif de communication,
la détermination de valeurs pour une pluralité de paramètres d'agrégateur conformément auxdites informations de mesure, où la détermination des valeurs pour la pluralité de paramètres d'agrégateur comprend la détermination d'un ensemble de paramètres d'identification d'agrégateur par la sélection d'une identité de cellule de couche physique, PCI, parmi une pluralité de PCI pour une affectation au premier dispositif de communication, où la sélection d'une PCI comprend la sélection d'une PCI la moins susceptible de résulter en un conflit d'accès, chaque entité station de base dans le réseau de communication cellulaire possédant une PCI respective,
la transmission des valeurs de paramètre au premier dispositif de communication,
au niveau du premier dispositif de communication, la conservation en mémoire des valeurs déterminées pour les paramètres d'agrégateur sous la forme d'une base de données de paramètres de valeurs requises pour initialiser la fonctionnalité d'agrégateur, et
l'exécution de la fonctionnalité d'agrégateur au moyen des valeurs provenant de la base de données de paramètres, où la fonctionnalité d'agrégateur comprend la fourniture d'une couverture radio à une pluralité de deuxièmes dispositifs de communication à l'intérieur d'une zone de couverture du premier dispositif de communication.
